# EUROPÄISCHE PATENTSCHRIFT

(11) **EP 3 207 356 B1**
(45) Veröffentlichungstag und Bekanntmachung des Hinweises auf die Patenterteilung: **03.06.2020**
(21) Anmeldenummer: 15794459.6
(22) Anmeldetag: 15.10.2015
(51) Int. Cl.: G01N 15/02, G01N 15/14

(54) **VORRICHTUNG UND VERFAHREN ZUR BESTIMMUNG DER PARTIKELGRÖSSE UND/ODER DER PARTIKELFORM VON PARTIKELN IN EINEM PARTIKELSTROM**
APPARATUS AND METHOD FOR DETERMINING THE PARTICLE SIZE AND/OR THE PARTICLE SHAPE OF PARTICLES IN A PARTICLE STREAM
PROCÉDÉ ET DISPOSITIF PERMETTANT DE DÉTERMINER LA TAILLE ET/OU LA FORME DE PARTICULES DANS UN FLUX DE PARTICULES

(30) Priorität: 15.10.2014 DE 102014015056; 28.11.2014 DE 102014017552
(43) Veröffentlichungstag der Anmeldung: 23.08.2017
(73) Patentinhaber: Microtrac Retsch GmbH, 42781 Haan (DE)
(72) Erfinder: BEIL, Sebastian, 52511 Geilenkirchen (DE); KNOP, Stephan, 58135 Hagen (DE)
(74) Vertreter: Schleitzer, Dirk-Karsten
(86) Internationale Anmeldenummer: PCT/EP2015/002046
(87) Internationale Veröffentlichungsnummer: WO 2016/058699

(56) Entgegenhaltungen:
- EP-A1- 1 972 921
- WO-A1-99/15877
- DE-A1-102009 020 778
- DE-C1- 19 802 141
- US-A1- 2014 009 621

## Beschreibung

Die Erfindung betrifft eine Vorrichtung mit den Oberbegriffsmerkmalen von Anspruch 1. Darüber hinaus betrifft die Erfindung ein Verfahren mit den Oberbegriffsmerkmalen von Anspruch 14.

Vorrichtungen der vorgenannten Art dienen dazu, Partikel eines Partikelgemisches hinsichtlich ihrer Größe und/oder ihrer Form zu charakterisieren. Ein typischer Einsatzbereich derartiger Vorrichtungen ist beispielsweise die Qualitätskontrolle bei der Produktion oder der Verwendung von partikelförmigen Materialien. Dabei ist es in aller Regel so, dass die Partikel des Partikelgemisches zunächst von einer Zuführeinrichtung vereinzelt und einer Messzone zugeführt werden, die von den Partikeln in Form eines Partikelstroms durchquert wird. Im Bereich der Messzone werden die Partikel durch eine geeignete Beleuchtungseinrichtung beleuchtet und von einer Detektionseinrichtung, beispielsweise einer digitalen Matrix-Kamera, elektrooptisch erfasst. Die Beleuchtung findet dabei vorzugsweise stroboskopisch statt, wobei als Lichtquellen bevorzugt Leuchtdioden oder Halbleiterlaser eingesetzt werden. Üblicherweise werden von der Zuführeinrichtung kommende Partikel durch die Schwerkraft beschleunigt und zwischen Lichtquelle und Bildaufnahmegerät durch den Detektionsbereich bewegt. Auf diese Weise wird eine Schattenprojektion der Partikel im Bildaufnahmegerät erzeugt. Aus den erfassten Bildern der Schattenprojektionen werden mittels einer Auswertungseinheit im Anschluss Form- und Größenkennwerte bestimmt bzw. berechnet.

Zur Erfassung eines möglichst breiten Spektrums von Partikelgrößen wird ein möglichst großer dynamischer Messbereich angestrebt. Darunter wird der Quotient aus der oberen und der unteren Messgrenze verstanden, das heißt aus der maximal und minimal erfassbaren Partikelgröße. Aus der DE 198 02 141 C1 ist eine Vorrichtung bekannt, die dieses Ziel durch den Einsatz von zwei oder mehr Matrix-Kameras mit unterschiedlichen Abbildungsmaßstäben verfolgt. Eine weitere Verringerung der unteren Messgrenze wird durch eine in der EP 1 972 921 A1 beschriebene Vorrichtung erreicht. Die dort beschriebene Vorrichtung weist zwei Lichtquellen auf, die zwei Messzonen möglichst optimal beleuchten. Die Messzonen werden dabei mit zwei verschiedenen Vergrößerungen aufgenommen, wobei die kleinere, mit höherer Vergrößerung aufgenommene Messzone deutlich stärker beleuchtet wird als die größere, mit geringerer Vergrößerung aufgenommene Messzone. Aus den zwei Paarungen von Lichtquellen und Bildaufnahmeeinheiten ergeben sich somit zwei unabhängige Strahlengänge. Dabei sind beide Strahlengänge so angeordnet, dass sich die kleinere Messzone im Zentrum der größeren Messzone befindet. In Verbindung mit den äußeren Abmessungen der verwendeten Objektive ergibt sich hieraus eine Kreuz-Geometrie für beide Strahlengänge. Als Folge der gekreuzten Strahlengänge sind die Sichtfelder der Kameras und damit die Objektebenen der entsprechenden Abbildungen gegeneinander verkippt. Aus dem Umstand, dass der Partikelstrom demnach nicht parallel zu beiden Kamera-Bildsensoren bzw. Objektebenen verläuft, ergibt sich eine Einschränkung des Messvolumens beider Messbereiche der Messzone. Das Messvolumen ist hierbei das Volumen, in dem eine Partikelauswertung anhand der Abbildung auf der Bildebene, das heißt dem Bildsensor der Kamera, möglich ist. Die Einschränkung des Messvolumens kann unter Umständen die Detektionswahrscheinlichkeit für kleine Partikel und damit die Auswertungsstatistik beeinflussen.

Darüber hinaus ist eine Anordnung mit gekreuzten Strahlengängen nachteilig bei der Verwendung von zusätzlichen Glasoberflächen, beispielsweise in Form einer Durchflussküvette, im Bereich der Messzone, da es bei nicht senkrechtem Einfall von Strahlenbündeln auf die Grenzfläche zweier Materialien mit unterschiedlichen Brechungsindizes zu einem räumlichen Versatz der Strahlenbündel kommt. Dies kann letztlich zu einer optischen Verzerrung des aufgenommenen Bildes führen.

Um aus den erfassten Bildern die tatsächlichen Form- und Größenkennwerte der Partikel des Partikelstroms ermitteln zu können, ist es notwendig, das Kamerabild zuvor mit einem Kalibrationsnormal zu kalibrieren. Im Fall gekreuzter Strahlengänge führt dies zu einem erheblichen Justageaufwand, da für jeden Strahlengang ein Kalibrationsnormal senkrecht zum entsprechenden Strahlengang mit hoher Präzision in die Messzone eingebracht werden muss.

In der EP 1 972 921 A1 wird eine weitere Ausführungsform einer Partikelmessvorrichtung offenbart, bei der durch die Verwendung von teiltransparenten Spiegeln die Beleuchtungsrichtungen und die Aufnahmerichtungen im Bereich der Messzone jeweils zusammenfallen. Auch hier ist vorgesehen, zwei Bereiche der Messzone, die mit unterschiedlichen Vergrößerungen aufgenommen werden, mit unterschiedlichen Intensitäten zu beleuchten.

Bei Verwendung der aus der EP 1 972 921 A1 bekannten Partikelmessvorrichtungen kann es allerdings zu Problemen bei der Bilddarstellung und Bildauswertung kommen, wenn zwei Messbereiche, die sich zumindest teilweise überlappen und mit unterschiedlich starker Vergrößerung aufgenommen werden, mit unterschiedlich hoher Intensität beleuchtet werden. Diese Problematik tritt insbesondere bei der Untersuchung von transparenten oder teiltransparenten Partikeln auf. Zu einer Störung des aufgenommenen Bildes kann es vor allem im Sichtfeld der Kamera mit geringerer Vergrößerung kommen. Hierbei tritt eine Überstrahlung von Teilbereichen des Bildes auf, so dass eine hohe Zahl von zu hellen oder sogar gesättigten Pixeln vorliegt. Dadurch lassen sich Partikelränder nicht mehr eindeutig identifizieren und Partikel nicht mehr eindeutig erkennen. Beides wirkt sich negativ auf die Genauigkeit bei der Partikelmessung aus. Ferner kann bei der Untersuchung von Partikeln aus photosensitiven Materialien eine stärkere Beleuchtung in einem der Messbereiche eine insbesondere chemische Veränderung der Partikel und/oder chemische Reaktionen der Partikel in diesem Messbereich bewirken, die im mit geringerer Intensität beleuchteten Messbereich nicht auftreten. Auch dies kann zu einem verfälschten Messergebnis bei der Partikeluntersuchung führen. Auch wird vermutet, dass Beugungseffekte auftreten, die sich nachteilig auf die Messgenauigkeit auswirken können.

Die WO 99/15877 A1 offenbart ein Verfahren und eine Vorrichtung zur Charakterisierung von Partikeln in einer Suspension, wobei ein optisches Element an dem die von der Messzone ausgehende Lichtstrahlung in zwei Strahlungsteile aufgeteilt wird.

Aufgabe der vorliegenden Erfindung ist es, eine Vorrichtung und ein Verfahren zur Bestimmung der Partikelgröße und/oder der Partikelform von Partikeln in einem Partikelstrom jeweils der eingangs genannten Art zur Verfügung zu stellen, bei denen ein hoher dynamischer Messbereich bei hoher Genauigkeit der Bestimmung der Partikelgröße und/oder der Partikelform bei gleichzeitig geringem Justageaufwand sichergestellt ist, wobei die oben geschilderten Probleme bei der Bilddarstellung und Bildauswertung nicht oder verringert auftreten. Die Vorrichtung soll sich zudem durch einen sehr kompakten Aufbau bei geringer Baugröße auszeichnen.

Erfindungsgemäß wird die vorgenannte Aufgabe durch eine Vorrichtung mit den Merkmalen von Anspruch 1 und durch ein Verfahren mit den Merkmalen von Anspruch 15 gelöst. Erfindungsgemäß ist die Beleuchtungseinrichtung derart ausgebildet, dass der erste Messbereich und der zweite Messbereich stets gemeinsam beleuchtet werden, wobei der erste Messbereich mit derselben Intensität beleuchtet wird wie der zweite Messbereich. Die Messbereiche befinden sich hierbei in wenigstens einer Objektebene. Die Objektebene wird durch die Abbildungsoptik in wenigstens zwei vorzugsweise nicht parallelen Bildebenen abgebildet. Zwei parallele Bildebenen sind aber nicht ausgeschlossen. In den Bildebenen befinden sich die Bildsensoren der Kameraeinrichtungen. Es versteht sich, dass zwischen der Messzone und dem optischen Element einerseits und dem optischen Element und der jeweiligen Kameraeinrichtung andererseits optische Einrichtungen der Abbildungsoptik, insbesondere Linsen, vorgesehen sein können. Die Abbildungsoptik kann insbesondere optische Einrichtungen umfassen, die den Kameraeinrichtungen jeweils zugeordnet sind, beispielsweise fest montierte Objektive. Der beschriebene Aufbau der erfindungsgemäßen Vorrichtung ermöglicht die Bestimmung der Partikelgröße und/oder -form mit einer hohen Genauigkeit bei einem hohen dynamischen Messbereich.

Aufgrund einer gemeinsamen, insbesondere homogenen, Beleuchtung der beiden Messbereiche mit derselben Intensität werden die oben geschilderten Probleme bei der Bilddarstellung und Bildauswertung, insbesondere aufgrund von Streulicht, verringert oder sogar völlig verhindert. Erfindungsgemäß wird sichergestellt, dass über die Fläche der Messbereiche keine relevanten, lokalen Veränderungen der Intensitätsverteilung auftreten.

Das optische Element bzw. die optische Einrichtung der erfindungsgemäßen Vorrichtung weist vorzugsweise wenigstens einen Strahlteiler auf. Ein Strahlteiler weist in der Regel eine Grenzfläche auf, an der das einfallende Licht zu einem gewissen Teil reflektiert wird, während der verbleibende Teil der Lichtstrahlen durch die Grenzfläche hindurchtritt. Ein halb- bzw. teildurchlässiger Spiegel stellt eine einfache Form eines Strahlteilers dar.

Eine Form eines Strahlteilers ist beispielsweise eine Anordnung von zwei Prismen, die an ihrer Basis durch ein Verbindungsmittel, beispielsweise ein Harz, zusammengekittet sind, wodurch sich genähert eine Quaderform ergibt. Ein solcher Strahlteiler funktioniert nach dem Prinzip der verhinderten Totalreflexion. Die Dicke der Verbindungsschicht und/oder das Harzmaterial bestimmt das Verhältnis, in dem die einfallende Lichtintensität aufgeteilt wird.

Bei einer bevorzugten Ausführungsform der erfindungsgemäßen Vorrichtung teilt das optische Element die einfallende, von der Messzone ausgehende Lichtstrahlung in wenigstens zwei Strahlungsteile auf, die mit der einfallenden Lichtstrahlung spektralgleich sind. Die spektrale Intensitätsverteilung der Strahlungsteile nach dem optischen Element ist in diesem Fall sowohl untereinander sowie zur einfallenden Lichtstrahlung vor dem optischen Element gleich, so dass die spektrale Information des einfallenden Lichts nicht aufgrund des Durchlaufs durch das optische Element verändert wird. Lediglich die Gesamtintensität jedes der Strahlungsteile ist geringer als die Gesamtintensität der einfallenden Lichtstrahlung.

Es versteht sich, dass eine Aufteilung nicht nur in Strahlungsteile mit gleicher Intensität erfolgen muss, sondern auch eine Aufteilung in einem beliebigen Verhältnis, d.h. in Strahlungsteile mit unterschiedlicher Intensität, möglich ist.

Neben der reinen Intensitätsaufteilung durch das optische Element ist es denkbar, die Abbildungen wellenlängenabhängig voneinander zu trennen bzw. die von der Messzone ausgehende Lichtstrahlung wellenlängenabhängig in wenigstens zwei Strahlungsteile aufzuteilen. Hierzu kann für eine spektrale Aufteilung der Bilder die Beleuchtungseinrichtung wenigstens zwei verschiedenfarbige Lichtquellen aufweisen. "Verschiedenfarbig" bedeutet in diesem Zusammenhang, dass die Lichtquellen Lichtstrahlung unterschiedlicher Wellenlänge bzw. im Wesentlichen in wenigstens zwei voneinander getrennten Wellenlängenbereichen emittieren. Der Wellenlängenabstand der Emissionsmaxima der jeweiligen Wellenlängenbereiche beträgt hinsichtlich einer guten Trennung der Abbildungen vorzugsweise wenigstens 50 nm, weiter vorzugsweise wenigstens 100 nm, besonders bevorzugt wenigstens 150 nm. Für die Trennung der Abbildungen kann ein dichroitisches optisches Element, insbesondere ein dichroitisches Prisma, dienen, das Licht wenigstens eines Wellenlängenbereichs transmittiert und Licht wenigstens eines anderen Wellenlängenbereichs vorzugsweise vollständig reflektiert. Eine Anpassung der Beleuchtungsintensität der Messbereiche kann somit einerseits durch die Auswahl der Wellenlänge unter Einbeziehung der spektralen Sensitivität der Bildsensoren der Kameraeinrichtung erfolgen. Des Weiteren können schmalbandige Filter, beispielsweise Interferenzfilter, mit einer definierten optischen Dichte zu diesem Zweck eingesetzt werden.

Eine weitere Möglichkeit zur Separation der Abbildungen stellt der Einsatz polarisierten Lichts dar. Voraussetzung hierfür ist, dass die Beleuchtungseinrichtung wenigstens eine Lichtquelle aufweist, die Licht mit einer definierten Polarisation emittiert. Eine Anpassung der auf die verschiedenen Bildebenen auftreffenden Lichtintensität kann dann durch den Einsatz von wenigstens einem Polarisationsfilter oder wenigstens einem Polarisationsfilter in Verbindung mit wenigstens einer Wellenlängenverzögerungsplatte, insbesondere einer λ/2-Ptatte, erreicht werden. Es ist in diesem Zusammenhang denkbar, als optisches Element zur Strahlungsaufteilung beispielsweise einen polarisierenden Strahlteiler vorzusehen, bei dem das Teilungsverhältnis durch den Polarisationswinkel des eintretenden Lichts bestimmt wird, sofern dieses linear polarisiert ist.

Es ist zudem möglich, eine Intensitätsaufteilung mittels anderer optischer Elemente zu erreichen. Beispielsweise lässt ein Lochspiegel den inneren Teil eines aufgeweiteten Lichtstrahls ungehindert durch eine Öffnung in der Spiegeloberfläche hindurchtreten, während der äußere, ringförmige Bereich des Strahlquerschnitts in einem einstellbaren Winkel reflektiert wird. Das Teilungsverhältnis der Intensitäten hängt dabei im Wesentlichen vom Durchmesser der Öffnung ab.

Um eine Beleuchtung der Messzone mit Licht in definierten Wellenlängenbereichen zu gewährleisten, werden als Lichtquellen der Beleuchtungseinrichtung vorzugsweise Leuchtdioden (LEDs) und/oder Halbleiterlaser eingesetzt. Neben einer Emission von Licht in einem äußerst schmalen Wellenlängenbereich zeichnen sich letztere zusätzlich durch die Emission von polarisiertem Licht aus.

Vorzugsweise ist die Beleuchtungseinrichtung zur gemeinsamen homogenen Beleuchtung der beiden Messbereiche ausgebildet. Eine homogene Beleuchtung der Messbereiche erhöht die Vergleichbarkeit des Messergebnisse für Partikel, die in verschiedenen Sektoren des Messbereichs gemessen wurden, und verringert gleichzeitig die Wahrscheinlichkeit für das Auftreten der eingangs genannten Streulichtproblematik weiter.

Zur homogenen Ausleuchtung der Messzone bzw. der beiden Messbereiche kann die Beleuchtungseinrichtung zwischen einer Lichtquelle oder mehreren Lichtquellen der Beleuchtungseinrichtung und der Messzone vorzugsweise wenigstens ein Diffusorelement, insbesondere eine Diffusorlinse oder eine Streuscheibe, aufweisen, so dass eine Flächenlichtquelle entsteht.

Eine homogene Beleuchtung der Messbereiche kann alternativ erreicht werden, indem die Lichtstrahlung, die von einer im Wesentlichen punktförmigen Lichtquelle abgegeben wird, zu einem Teil, insbesondere mittels einer Kollimatorlinse oder einer Kollimationsanordnung, parallelisiert wird.

Im Fall mehrerer Lichtquellen versteht es sich, dass beispielsweise auch eine Flächenlichtquelle und eine Punktlichtquelle mit parallelisiertem Strahlengang zusammen eingesetzt werden können.

Sofern Partikel vergleichend ausgewertet werden sollen, die sowohl im Kamerabild des einen Messbereichs als auch im Kamerabild des anderen Messbereichs auftreten, ist für eine eindeutige Zuordnung von Partikeln eine zeitgleiche Belichtung und Aufnahme erforderlich, damit sich die Partikel exakt an derselben räumlichen Position im Messbereich befinden. Aufgrund der hohen Geschwindigkeit der Partikel im Messbereich erfordert dies eine Synchronisation auf einer Nanosekunden-Zeitskala, die mit mehreren Lichtquellen nur unter erheblichem apparativem Aufbau gewährleistet werden kann. Bei der Verwendung einer Lichtquelle tritt dieses Synchronisationsproblem nicht auf.

Bei einer bevorzugten Ausführungsform der erfindungsgemäßen Vorrichtung werden jeweils beide Messbereiche in Folge, insbesondere abwechselnd, mit Lichtstrahlung unterschiedlicher Intensität beleuchtet. Dadurch lässt sich bei stets gemeinsamer Beleuchtung beider Messbereiche, wobei beide Messbereiche mit jeweils gleicher Intensität beleuchtet werden, erreichen, dass eine Beleuchtung der Messbereiche mit einer Intensität erfolgt, die jeweils an die Vergrößerung, mit der die entsprechende Kameraeinrichtung den Messbereich jeweils aufnimmt, angepasst ist.

Vorzugsweise ist die Beleuchtungseinrichtung zur gepulsten Beleuchtung der beiden Messbereiche ausgebildet. Dabei kann die Dauer und/oder die Intensität wenigstens zweier Pulse unterschiedlich sein. Bevorzugt wechseln sich zwei Pulse höherer und niedrigerer Intensität bzw. längerer und kürzerer Dauer im zeitlichen Verlauf ab. Ein erster Puls mit geringerer Intensität und/oder kürzerer Dauer kann beispielsweise die beiden Messbereiche beleuchten, während die erste Kameraeinrichtung den ersten, vorzugsweise größeren, Messbereich mit einer ersten, vorzugsweise geringeren Vergrößerung aufnimmt, und ein zweiter Puls kann mit höherer Intensität und/oder längerer Dauer die beiden Messbereiche beleuchten, während die zweite Kameraeinrichtung den zweiten, vorzugsweise kleineren, Messbereich mit einer zweiten, vorzugsweise stärkeren, Vergrößerung aufnimmt.

Zur Untersuchung der Partikel werden also die Bilder der ersten Kameraeinrichtung ausgewertet, die von dem ersten Puls mit geringerer Intensität und/oder kürzerer Dauer belichtet wurden, und die Bilder von der zweiten Kameraeinrichtung, die mit dem zweiten Puls höherer Intensität und/oder längerer Dauer belichtet wurden. Die Belichtungsstärke wird demnach von der räumlichen in die zeitliche Domäne überführt. Dadurch wird gewährleistet, dass die Bilder jeder der Kameraeinrichtungen in geeigneter Weise, d.h. angepasst an die jeweilige Vergrößerung der Abbildungsoptik, belichtet werden, während die Messbereiche in jedem Moment der Beleuchtung mit identischer Intensität beleuchtet werden, um der eingangs genannten Streulichtproblematik zu begegnen.

Im Fall einer unterschiedlichen Pulslänge kann die Emissionsintensität der Pulse insbesondere gleich sein. Da die Belichtungszeit pro Bild bei üblicherweise eingesetzten Kameraeinrichtungen deutlich größer ist als die übliche Pulslänge bei einer stroboskopischen Beleuchtung, trifft eine größere Lichtmenge während der Integrationszeit der Kameraeinrichtung auf dem Kamerachip ein, so dass ein Bild mit einer Helligkeit aufgenommen wird, die für eine zufriedenstellende Auswertung ausreichend ist.

Um die Zuordnung der Kamerabilder zu den entsprechenden Beleuchtungsimpulsen zu ermöglichen oder zumindest zu erleichtern, ist vorzugsweise wenigstens eine Kameraeinrichtung mit der Beleuchtungseinrichtung synchronisiert.

Die Messbereiche können sich in einer gemeinsamen Objektebene oder in zwei unterschiedlichen Objektebenen befinden. Vorzugsweise sieht die Erfindung eine Split-View-Optik vor, bei der die von der Messzone bzw. den Messbereichen ausgehenden Strahlenbündel bis zum optischen Element der Abbildungsoptik streckenweise parallel zu einer optischen Achse verlaufen. Die Messbereiche befinden sich dann in zwei parallelen Objektebenen oder, vorzugsweise, in einer gemeinsamen Objektebene, wobei die Hauptbewegungsrichtung der Partikelströmung in der Messzone parallel zu den Objektebenen bzw. der gemeinsamen Objektebene verläuft. Hierdurch sinkt der Justageaufwand bei der Kalibration der erfindungsgemäßen Vorrichtung. Erfindungsgemäß ist es hierzu nicht erforderlich, die beiden Kameraeinrichtungen, so wie in der DE 198 02 141 C1 beschrieben, nebeneinander anzuordnen, woraus ein sehr kompakter Aufbau der erfindungsgemäßen Vorrichtung resultiert.

Nach der Aufteilung der Strahlenbündel an und/oder von dem optischen Element können durch die Auswahl geeigneter Linsensysteme wenigstens zwei unterschiedliche Abbildungsmaßstäbe für die aufgenommenen Messbereiche erreicht werden. Bei Einsatz von digitalen Matrix-Kameras ergeben sich bei gleicher Größe der Bildsensoren bei wenigstens zwei unterschiedlichen Abbildungsmaßstäben wenigstens zwei unterschiedlich große Messbereiche. Vorzugsweise liegt ein zweiter Messbereich, der mit einer stärkeren Vergrößerung aufgenommen wird, innerhalb eines ersten Messbereiches, der mit einer geringeren Vergrößerung aufgenommen wird. Weiter vorzugsweise liegt der zweite Messbereich in der Mitte des ersten Messbereiches. Der zweite Messbereich ist vorzugsweise eine Teilmenge des ersten Messbereiches.

Aus dem sich beidseitig einer Objektebene entlang der optischen Achse erstreckende Schärfentiefebereich der Abbildung, in dem eine für die Bestimmung der Partikelgröße und/oder der Partikelform ausreichende Abbildungsschärfe gegeben ist, ergibt sich zusammen mit dem jeweiligen Messbereich ein Messvolumen. Durch die Auswahl geeigneter Linsensysteme und/oder durch eine Verschiebung der jeweiligen Kameraeinrichtung und bedarfsweise des vorgelagerten Linsensystems relativ zur Messzone entlang der optischen Achse ist es möglich, den Abstand der Objektebenen voneinander derart einzustellen, dass das Messvolumen des stärker vergrößerten Messbereichs vollständig im Messvolumen des weniger stark vergrößerten Messbereichs liegt. Dadurch ist ein hoher dynamischer Messbereich bei hoher Genauigkeit der Bestimmung der Partikelgröße und/oder der Partikelform sichergestellt. Insbesondere ist von Vorteil, wenn die Objektebenen in einer gemeinsamen Ebene liegen, wobei die entsprechenden Messvolumina zentriert geschnitten werden. Dadurch lässt sich die Genauigkeit der Bestimmung weiter verbessern.

Das optische Element kann derart ausgebildet sein, dass die resultierenden Strahlungsteile unterschiedliche Lichtintensitäten aufweisen. Dadurch ist es insbesondere möglich, dass der von der zweiten Kameraeinrichtung aufgenommene zweite Messbereich, vorzugsweise der kleinere und mit stärkerer Vergrößerung aufgenommene Messbereich, mit einer höheren Intensität ausgeleuchtet wird als der von einer ersten Kameraeinrichtung aufgenommene erste Messbereich, vorzugsweise der größere und mit weniger starker Vergrößerung aufgenommene Messbereich. Hierdurch wird erreicht, dass jeder Messbereich mit einer ausreichend hohen Intensität bzw. Lichtmenge ausgeleuchtet wird. Das Verhältnis der Intensitätsaufteilung auf die beiden Strahlungsteile kann dabei so gewählt werden, dass möglichst gleiche Verstärkungseinstellungen bzw. Gain-Werte für alle Kameraeinrichtungen verwendet werden können.

In einer alternativen Ausführungsform der erfindungsgemäßen Vorrichtung ist wenigstens ein weiteres optisches Element zur Aufteilung eines an dem ersten optischen Element erzeugten Strahlungsteils in zwei weitere Strahlungsteile und wenigstens eine weitere Kameraeinrichtung vorgesehen. In diesem Fall werden wenigstens drei Messbereiche mit drei Kameraeinrichtungen aufgenommen, wobei die Messbereiche in drei Objektebenen angeordnet sind. Die Objektebenen können wiederum parallel zueinander angeordnet sein oder zusammenfallen. Vorzugsweise ist es möglich, zwei Messbereiche mit einer gleichen Vergrößerung aufzunehmen.

Zwei Messbereiche können in Objektebenen angeordnet sein, die in Richtung der optischen Achse voneinander beabstandet sind. Dadurch ist es möglich, dass die Messvolumina der beiden Messbereiche ineinander übergehen, so dass sich ein breiterer durchgehender Bereich mit für die Auswertung ausreichender Abbildungsschärfe ergibt.

Alternativ ist es aber auch möglich, dass die Messvolumina der beiden Messbereiche übereinstimmen.

Es versteht sich, dass durch von mehr als zwei optischen Elementen und einer entsprechenden Anzahl weiterer Kameraeinrichtungen weitere Messvolumina entlang der optischen Achse in gleicher Weise aufgenommen werden können, so dass sich eine entsprechend größere Ausdehnung des detektierbaren Volumens entlang der optischen Achse ergibt. Die Wahrscheinlichkeit, dass sich ein Partikel durch den detektierbaren Bereich bewegt und damit erfasst werden kann, wird dadurch entsprechend erhöht. Dies ist insbesondere von Bedeutung im Fall eines kleineren, mit stärkerer Vergrößerung abgebildeten Messbereichs.

Die Abbildungsoptik kann wenigstens zwei optische Elemente aufweisen, wobei ein optisches Element Lichtstrahlung in wenigstens zwei Strahlungsteile mit gleichem Spektrum bzw. gleicher Farbe und/oder gleicher Polarisation und ein anderes optisches Element Lichtstrahlung in wenigstens zwei Strahlungsteile mit unterschiedlichen Spektren bzw. Farben und/oder unterschiedlichen Polarisationen aufteilt. An dem ersten optischen Element kann beispielsweise eine Aufteilung der Lichtstrahlung in zwei Strahlungsteile erfolgen, was es zulässt, zwei Messbereiche mit unterschiedlicher Vergrößerung und, vorzugsweise, bei unterschiedlicher Beleuchtungsintensität, aufzunehmen. Einer der beiden Strahlungsteile wird an dem zweiten optischen Element weiter aufgeteilt in zwei weitere Strahlungsteile mit unterschiedlichen Spektren bzw. Farben und/oder unterschiedlichen Polarisationen. Dies lässt einen Zugang zu spektralen bzw. chromatischen Informationen simultan zur räumlichen Abbildung zu.

Durch die Wahl von Kameraeinrichtungen mit unterschiedlichen Detektionseigenschaften, wobei diese insbesondere eine unterschiedliche Sensitivität in Abhängigkeit von der Wellenlänge des einfallenden Lichts beinhalten, wird beispielsweise der Zugang zu spektralen bzw. chromatischen Informationen simultan zur räumlichen Abbildung ermöglicht.

Die Abbildungsoptik kann darüber hinaus wenigstens eine Linse mit einer variablen Brennweite aufweisen. Die Brennweite der Linse kann hierbei insbesondere elektrisch veränderbar sein. Dies ermöglicht eine Veränderung der abbildenden Eigenschaften der Abbildungsoptik im laufenden Betrieb, insbesondere ohne dass optische Komponenten, insbesondere Linsen, durch manuelle Eingriffe in den Aufbau ausgetauscht werden müssen.

Alternativ oder zusätzlich kann die Abbildungsoptik ferner auch einen Aufbau aufweisen, der dem eines Teleskops entspricht. Dies kann von Vorteil sein, wenn besondere Anforderungen an die Art der Abbildung vorliegen.

Zur Verbesserung der optischen Abbildungseigenschaften der Abbildungsoptik kann wenigstens ein Achromaten-Doublett vorgesehen sein, um das Auftreten chromatischer Aberrationen zu vermindern. Zur Vermeidung sphärischer Aberrationen kann die Abbildungsoptik wenigstens eine asphärische Linse aufweisen.

Darüber hinaus kann die Abbildungsoptik vorzugsweise telezentrische Abbildungseigenschaften aufweisen. Wenigstens zwei unabhängige Aperturblenden können zur Einstellung von Schärfentiefebereichen und damit zur Einstellung der den Messbereichen zugeordneten Messvolumina dienen.

Die vorliegende Erfindung betrifft auch eine Vorrichtung zur Bestimmung der Partikelgröße und/oder der Partikelform von Partikeln in einem Partikelstrom, mit einer Zuführeinrichtung zum Zuführen der Partikel zu einer Messzone, wobei die Partikel die Messzone durchströmen, mit einer Beleuchtungseinrichtung zum Beleuchten der Messzone, mit wenigstens zwei Kameraeinrichtungen, die jeweils einen der entsprechenden Kameraeinrichtung zugeordneten Messbereich bzw. eine zugeordnete Bilderfassungsfläche der Messzone aufnehmen, wobei eine Kameraeinrichtung einen ersten, vorzugsweise flächenmäßig kleineren, Messbereich mit einer stärkeren Vergrößerung aufnimmt und eine andere Kameraeinrichtung einen anderen, vorzugsweise flächenmäßig größeren, Messbereich mit einer geringeren Vergrößerung aufnimmt, und mit einer Auswertungseinrichtung zur Bestimmung der Partikelgrößen und/oder der Partikelformen anhand der Aufnahmen der Messbereiche. Darüber hinaus betrifft die vorliegende Erfindung ein Verfahren zur Bestimmung der Partikelgröße und/oder der Partikelform von Partikeln in einem Partikelstrom, wobei Partikel einer Messzone zugeführt werden und die Messzone durchströmen, wobei die Messzone mit wenigstens zwei Kameraeinrichtungen aufgenommen wird, wobei eine Kameraeinrichtung einen ersten, vorzugsweise kleineren, Messbereich mit einer stärkeren Vergrößerung aufnimmt und eine andere Kameraeinrichtung einen anderen, vorzugsweise größeren, Messbereich mit einer geringeren Vergrößerung aufnimmt, und wobei die Partikelgröße und/oder die Partikelform anhand der Aufnahmen der Kameraeinrichtungen bestimmt wird.

Sollen mit der aus der EP 1 972 921 A1 bekannten Vorrichtung Partikelverteilungen mit einer anderen Größe bzw. mit einem anderen Größenbereich untersucht werden, ist es erforderlich, den Abbildungsmaßstab einer Kameraeinrichtung an die Partikelgrößen der zu untersuchenden Kornverteilung anzupassen. Dies ist mit manuellen Tätigkeiten, wie Objektivwechsel, Regulierung der Tiefenschärfe, Änderung der Kameraposition sowie einer Justierung der Vorrichtung verbunden. Darüber hinaus ist es erforderlich, die eingestellte Höhe der Beleuchtungsintensität des Messbereiches, der mit einer anderen Vergrößerung aufgenommen werden soll, entsprechend zu ändern, um Aufnahmen mit hoher Schärfe und gutem Kontrast zu ermöglichen und einem Überstrahlen der Bildsensoren der Kameraeinrichtung aufgrund zu hoher Beleuchtungsintensität vorzubeugen. Das Einstellen jeweils einer an eine neue Vergrößerung des Messbereiches angepassten Intensität ist jedoch mit einer zeit- und arbeitsaufwendigen Anpassung der Fokussieroptik des Beleuchtungssystems und mit einer sich daran anschließenden Neujustierung der Vorrichtung verbunden.

Darüber hinaus ist bei der bekannten Vorrichtung für eine ausreichende Beleuchtung des Messbereiches, der mit einer stärkeren Vergrößerung aufgenommen wird, eine hohe Fokussierung der zur Beleuchtung dieses Messbereiches eingesetzten Laserstrahlung notwendig. Die Fokussierung ist so gewählt, dass der Fokusdurchmesser lediglich einige Millimeter beträgt, was die Justierung der zugeordneten Kameraeinrichtung erschwert. Bei nicht exakter Justierung kann es zu einer nichthomogenen Ausleuchtung des Messbereiches kommen, was für eine exakte Bestimmung der Partikelgrößen und/oder Partikelformen von Nachteil ist.

Aufgabe der vorliegenden Erfindung ist es auch, eine Vorrichtung und ein Verfahren jeweils der eingangs genannten Art zur Verfügung zu stellen, die eine gegenüber den bekannten Vorrichtungen und Verfahren einfachere, insbesondere kundenspezifische Änderung des Abbildungsmaßstabes bei der Aufnahme eines Messbereiches oder auch beider Messbereiche zur Anpassung des Abbildungsmaßstabes an eine veränderte Größe und/oder Größenverteilung der Partikel in der Kornverteilung ermöglichen. Darüber hinaus soll der Aufwand zur Justierung der Vorrichtung, insbesondere zur Justierung der Kameraeinrichtungen, verringert sein und es soll eine sehr homogene Ausleuchtung der Messbereiche, insbesondere des stärker vergrößerten Messbereiches, gewährleistet sein.

Zur Lösung der vorgenannten Aufgaben ist bei einer Vorrichtung der eingangs genannten Art erfindungsgemäß vorgesehen, dass die Beleuchtungseinrichtung zwei Lichtquellen aufweist, wobei wenigstens eine erste Lichtquelle ein erstes Beleuchtungsfeld der Messzone und wenigstens eine zweite Lichtquelle ein zweites Beleuchtungsfeld der Messzone beleuchtet, wobei der stärker vergrößerte Messbereich in dem ersten Beleuchtungsfeld und der weniger stark vergrößerte Messbereich in dem zweiten Beleuchtungsfeld liegt und wobei die Beleuchtung der beiden Beleuchtungsfelder und damit der beiden Messbereiche mit übereinstimmenden Intensitäten erfolgt.

Die Beleuchtungsintensität bzw. die Bestrahlungsstärke ist die Strahlungsleistung pro Fläche in Watt pro Quadratmeter und betrifft die gesamte Leistung der eingehenden elektromagnetischen Energie, die auf ein Beleuchtungsfeld bzw. einen Messbereich trifft, bezogen auf die Größe der Fläche des Beleuchtungsfeldes bzw. des Messbereiches. Hierbei wird davon ausgegangen, dass mit einer möglichst geringen Änderung der Intensität über die Fläche beleuchtet wird.

"Übereinstimmende" Intensitäten im Sinne der Erfindung liegen insbesondere dann vor, wenn die beiden Beleuchtungsfelder mit identischer Intensität beleuchtet werden. Der Weg der Erfindung wird jedoch nicht verlassen, wenn die Beleuchtung der beiden Beleuchtungsfelder mit geringfügig voneinander abweichenden Intensitäten erfolgt, wobei die Intensitätsabweichung weniger als 5 %, insbesondere weniger als 2 %, betragen kann.

Die Beleuchtung beider Beleuchtungsfelder und damit beider Messbereiche mit übereinstimmender Intensität ermöglicht eine einfache Anpassung der Vergrößerung eines Messbereiches oder beider Messbereiche an eine bestimmte Partikelgröße durch Objektivanpassung und/oder Objektivwechsel, d. h. durch eine Vergrößerung oder eine Verkleinerung des Abbildungsmaßstabes wenigstens einer Kameraeinrichtung, ohne dass hierzu eine Veränderung des optischen Systems der Beleuchtungseinrichtung, gebildet aus Lichtquellen und Linsensystemen, erforderlich ist. Insbesondere ermöglicht es die Erfindung, die Vergrößerung des Messbereiches, der mit höherer Vergrößerung aufgenommen wird, bzw. den Abbildungsmaßstab der zugeordneten Kameraeinrichtung entsprechend an die Partikelgröße anzupassen. Vor dem Hintergrund einer ausreichenden Bildschärfe und einem ausreichenden Kontrast der Aufnahmen sowie einer etwaigen unerwünschten Überstrahlung der Bildsensoren der Kameraeinrichtung wird die zulässige Änderung der Vergrößerung eines Messbereiches oder beider Messbereiche bei gleichbleibender Intensität der Ausleuchtung insbesondere bestimmt durch die eingestellte Höhe der Beleuchtungsintensität, die mit dem optischen System der Beleuchtungseinrichtung erreicht wird, und durch die Lichtempfindlichkeit der Sensoren der Kameraeinrichtungen. Im Ergebnis wird bei der Erfindung nicht für jeden Beleuchtungsbereich eine für die jeweilige Vergrößerung optimale Intensität eingestellt, so wie dies bei der aus der EP 1 972 921 A1 bekannten Vorrichtung der Fall ist. Bei der aus der EP 1 972 921 A1 bekannten Vorrichtung ist es so, dass das Verhältnis der Intensität eines stärker beleuchteten Bereichs zur Intensität eines weniger stark beleuchteten Bereichs 70:1 oder mehr betragen kann. Stattdessen wird erfindungsgemäß eine bestimmte gleiche Höhe der Beleuchtungsintensität für beide Beleuchtungsfelder eingestellt.

Es ist zweckmäßig, wenn die Höhe der bei der erfindungsgemäßen Vorrichtung eingestellten Beleuchtungsintensität, mit der beide Beleuchtungsfelder bestrahlt werden, angepasst ist an eine bestimmte, festgelegte Vergrößerung eines (stärker vergrößerten) Messbereiches, beispielsweise an eine 4-fache, 8-fache, 10-fache oder sogar 12- bis 20-fache Vergrößerung. Vorzugsweise ist die Höhe der Beleuchtungsintensität so eingestellt, dass sich wenigstens ein Messbereich bei maximaler Vergrößerung des Messbereiches mit einer in der Vorrichtung eingesetzten Kameraeinrichtung aufnehmen lässt, ohne dass Unschärfen in der Aufnahme die Bestimmung der Partikelgröße und/oder der Partikelform mit der gewünschten Genauigkeit erschweren oder gar ausschließen. Für die bestimmte, festgelegte Vergrößerung ist die eingestellte Beleuchtungsintensität dann optimal eingestellt, wenn die Größe des von einem Partikel abgeschatteten Bereiches auf den Kamerasensoren im Wesentlichen der tatsächlichen Größe eines Partikels in der Aufnahme unter Berücksichtigung des Abbildungsmaßstabes entspricht. Insbesondere soll die eingestellte Intensität ausreichend hoch sein, um bei der bestimmten Vergrößerung eine hohe Bildschärfe mit scharfen Partikelrändern und eine kontrastreiche Darstellung der Partikel in der Aufnahme zu gewährleisten. Die eingestellte Intensität soll vorzugsweise derart sein, dass dreißig Aufnahmen pro Sekunden oder mehr mit einer Belichtungszeit von ca. 100 bis 200 ns oder weniger zu realisieren sind. Damit kann selbst bei Partikelstromgeschwindigkeiten von bis zu 50 m/s die gewünschte Bestimmung von Partikelgröße(n) und/oder Partikelform(en) durchgeführt werden.

Die erfindungsgemäße Vorrichtung lässt aufgrund der eingestellten (hohen) Beleuchtungsintensität, mit der beide Beleuchtungsfelder bestrahlt werden, insbesondere eine Steigerung der Vergrößerung wenigstens eines Messbereiches zu, insbesondere des (größeren) Messbereiches, der weniger stark vergrößert aufgenommen wird, ohne hierzu eine Neueinstellung bzw. Anpassung der Beleuchtungsintensität vornehmen zu müssen. Je nach Höhe der eingestellten Beleuchtungsintensität kann jedoch auch die Vergrößerung des (kleineren) Messbereiches erhöht werden, der mit stärkerer Vergrößerung aufgenommen wird.

Sofern die Beleuchtungsintensität aufgrund der Erhöhung des Abbildungsmaßstabes zu gering ist, kann eine sogenannte Low-Light-Kamera eingesetzt werden, die höher-lichtempfindliche Sensoren (bzw. eine höhere ISO-Empfindlichkeit) aufweist. Das Gleiche gilt dann, wenn die Höhe der bei der erfindungsgemäßen Vorrichtung eingestellten Beleuchtungsintensität, mit der beide Beleuchtungsfelder bestrahlt werden, angepasst ist an eine vergleichsweise geringe Vergrößerung eines Messbereiches, beispielsweise eine 2- oder 4-fache Vergrößerung.

Zum anderen wird durch die eingestellte Beleuchtungsintensität vorzugsweise auch ermöglicht, den Abbildungsmaßstab bei der Aufnahme von wenigstens einem Messbereich zu verringern, insbesondere des (kleineren) Messbereiches, der stärker vergrößert aufgenommen wird, ohne hierzu eine Neueinstellung bzw. Anpassung der Beleuchtungsintensität vornehmen zu müssen.

Durch den Einsatz von Intensitätskompensationsmitteln, wie Blenden oder Filtern, auf der Seite der zugeordneten Kameraeinrichtung(en) kann eine Überbelichtung der Bildsensoren, insbesondere nach einer Verringerung des Abbildungsmaßstabes, bei gleich hoher Beleuchtungsstärke ausgeschlossen werden. Auch können weniger lichtempfindliche Sensoren und/oder Farbkameras eingesetzt werden. Vorzugsweise ist jedoch wenigstens ein einstellbares Intensitätskompensationsmittel vorgesehen, bei dem die Stärke der Verringerung der Beleuchtungsintensität der Kamerasensoren einstellbar ist. Auch ein Wechsel des Intensitätskompensationsmittels ist in Abhängigkeit von dem eingestellten Abbildungsmaßstab der Kameraeinrichtung möglich. Das Intensitätskompensationsmittel ist vorzugsweise in Beleuchtungsrichtung nach der Messzone und vor dem Objektiv der Kameraeinrichtung angeordnet und stellt ein von der Kamera getrenntes, separates Einstellmittel zur Regulierung der Beleuchtungsintensität dar.

Da eine Änderung der Vergrößerung bzw. des Abbildungsmaßstabes erfindungsgemäß durch Objektivanpassung bzw. Objektivwechsel der Kameraeinrichtung und nicht durch Änderung der eingestellten Höhe der Beleuchtungsintensität erfolgt, entfällt die Notwendigkeit einer Neujustierung des optischen Systems der Beleuchtungseinrichtung nach Änderung des Abbildungsmaßstabes, was die Anpassung der Vergrößerung an unterschiedliche Partikelgrößen weiter vereinfacht.

Jedem Beleuchtungsfeld ist erfindungsgemäß wenigstens eine separate Lichtquelle zugeordnet, was die Steuerung der Beleuchtung insbesondere bei gepulster Beleuchtungsstrahlung vereinfacht. Wird die Beleuchtung mittels gepulster Beleuchtungsstrahlung erreicht, ist vorzugsweise vorgesehen, dass die beiden Beleuchtungsfelder zeitlich alternierend bzw. zeitlich versetzt beleuchtet werden. Durch nicht-synchronisierte Lichtimpulse kann eine Überbelichtung der Bildsensoren einer Kameraeinrichtung vermieden werden, wenn sich die Messbereiche schneiden oder überlappen. In Abhängigkeit von der Höhe der vorgegebenen Beleuchtungsintensität und/oder von der Anordnung der Messbereiche zueinander können beide Beleuchtungsfelder auch gleichzeitig beleuchtet werden und/oder es können sich die Lichtimpulse zeitlich überlappen.

Die Lichtquellen können übereinstimmende, insbesondere identische, Abstrahlleistungen in Watt pro Quadratmeter aufweisen. Vorzugsweise sind baugleich ausgebildete lichtemittierende Dioden (LEDs) vorgesehen, die beispielsweise Strahlung mit der Wellenlänge von 625 nm emittieren können. Dadurch lässt sich in einfacher Weise sicherstellen, dass beide Beleuchtungsfelder mit übereinstimmender Intensität beleuchtet werden können.

Zu dem gleichen Zweck können zwischen den Lichtquellen und der Messzone gleich ausgebildete Linsensysteme mit jeweils einer Mehrzahl von Linsen zur Ausbildung identischer Beleuchtungsstrahlengänge vorgesehen sein.

Um den größten Teil des abgestrahlten Lichtes zur Beleuchtung zu nutzen und die Beleuchtungsfelder möglichst homogen auszuleuchten, sind bei einer besonders bevorzugten Ausführungsform der Erfindung zwischen den Lichtquellen und der Messzone gleich ausgebildete Linsensysteme, die jeweils eine Mehrzahl von Linsen zur Erzeugung von mit Bezug auf die optische Achse näherungsweise achsparallelen Strahlenbündeln aufweisen können, vorgesehen. Für den Fall, dass ein Beleuchtungsfeld mit mehreren Lichtquellen beleuchtet wird, kann ein Diffusorelement vorgesehen sein, um eine gleichmäßige Ausleuchtung zu erreichen.

Um einen platzsparenden konstruktiven Aufbau der Beleuchtungseinrichtung zu erreichen, können zwei unterschiedlichen Lichtquellen zugeordnete Linsensysteme eine gemeinsame Linse, insbesondere eine Meniskenlinse, aufweisen, durch die von den Lichtquellen ausgehende Lichtstrahlen verlaufen.

Um die Justierung der Kameraeinrichtung, die den größeren Abbildungsmaßstab aufweist bzw. einen Messbereich mit einer stärkeren Vergrößerung aufnimmt, zu vereinfachen, ist es von Vorteil, wenn beide Beleuchtungsfelder eine gleiche Größe aufweisen. Jedenfalls das Beleuchtungsfeld, in dem der stärker vergrößerte Messbereich liegt, ist größer als der zugeordnete Messbereich, so dass eine einfachere Justierung der zugeordneten Kameraeinrichtung möglich ist. Durch die größere Fläche des Beleuchtungsfeldes, in dem der stärker vergrößerte Messbereich liegt, ist eine sehr homogene Ausleuchtung dieses Messbereiches gewährleistet.

Die Beleuchtungsstrahlengänge für die beiden Kameraeinrichtungen können sich in der Messzone kreuzen, so dass die Messbereiche, die von den Kameraeinrichtungen aufgenommen werden, zueinander gekippt sind. Dies ermöglicht eine platzsparende Anordnung der optischen Elemente der Beleuchtungseinrichtung einerseits und der Kameraeinrichtungen andererseits und damit eine entsprechend geringe Baugröße der erfindungsgemäßen Vorrichtung. Die Kameraeinrichtungen können aber auch so justiert sein, dass der Messbereich, der mit einer stärkeren Vergrößerung aufgenommen wird, innerhalb von dem Messbereich liegt, der mit einer schwächeren Vergrößerung aufgenommen wird. Der Messbereich, der mit einer stärkeren Vergrößerung aufgenommen wird, kann auch vollständig außerhalb des Messbereiches liegen, der mit einer schwächeren Vergrößerung aufgenommen wird.

Die Kameras können als Digitalkameras mit einem zweidimensionalen Bildsensor ausgebildet sein. Der Bildsensor kann ein CCD-Bildsensor oder auch ein CMOS-Bildsensor sein. Die einzelnen lichtempfindlichen Elemente (Pixel) des Bildsensors können nur eine begrenzte durch Photonen verursachte Ladungsmenge aufnehmen. Wird ein Bildelement zu stark belichtet, so wird diese Ladungsmenge überschritten und das Bildelement gibt die überzähligen Ladungen an die benachbarten Bildelemente ab. Da diese ebenfalls lediglich eine begrenzte Ladungsmenge aufnehmen können, kommt es zur Ausbildung von hellen Bereichen in der Aufnahme, was unerwünscht ist. Um bei hoher Beleuchtungsintensität des Messbereiches, der mit einer geringeren Vergrößerung aufgenommen wird, und/oder bei einer Verringerung des Abbildungsmaßstabes einer Kameraeinrichtung bei gleichbleibender Beleuchtungsintensität des aufgenommenen Messbereiches eine Überbelichtung der Bildsensoren der Kameraeinrichtung zu verhindern, kann die Kameraeinrichtung wenigstens ein vorzugsweise einstellbares Intensitätskompensationsmittel aufweisen, das zur Verringerung und/oder Regulierung der Beleuchtungsintensität der Bildsensoren ausgebildet und vorgesehen ist. Das Intensitätskompensationsmittel kann beispielsweise eine Blende und/oder ein Neutraldichtefilter sein. Auch kann als Intensitätskompensationsmittel ein lichtschwächeres Objektiv eingesetzt werden. Alternativ kann eine Kameraeinrichtung mit weniger lichtempfindlichen Bildsensoren und/oder eine Kameraeinrichtung mit farbsensiblen Bildsensoren für die Detektion von Farbbildern eingesetzt werden, da hier eine geringere Gefahr des Überstrahlens der Bildsensoren besteht. Es versteht sich, dass eine Kombination mehrerer Intensitätskompensationsmittel vorgesehen sein kann.

Durch den Einsatz einer Kameraeinrichtung, die Low-light-Bildsensoren aufweist, die sich durch weniger Rauschen auszeichnen, sind stärkere Vergrößerungen eines Messbereiches auch bei vergleichsweise geringen Beleuchtungsintensitäten des Messbereiches möglich.

Um den Streulichteinfluss zu begrenzen, kann wenigstens eine zusätzliche Blende eingesetzt werden.

In Übereinstimmung mit der aus der EP 1 972 921 A1 bekannten Vorrichtung kann zumindest eine der Kameraeinrichtungen ein telezentrisches Objektiv aufweisen, so dass die Partikelgröße über den Tiefenschärfebereich hinaus, innerhalb des sogenannten Telezentriebereiches, mit ausreichender Genauigkeit bestimmt werden kann.

Die erfindungsgemäße Vorrichtung und das erfindungsgemäße Verfahren sind insbesondere zur Bestimmung von Partikelgrößen rieselfähiger und/oder dispergierfähiger Materialien im Bereich von 0,2 µm bis 10 mm, insbesondere von 0,7 µm bis 3 mm, geeignet.

Die Größe der Messbereiche bzw. der Objektfelder der Kameraeinrichtungen, die Auflösungen pro Pixel und die effektiven Pixelzahlen sowie die Anzahl der aufgenommenen Bilder pro Sekunde und die Messgrenzen bzw. Dynamikfaktoren können den in der DE 198 02 141 C1 und/oder den in der EP 1 972 921 A1 genannten Werten bzw. Wertebereichen entsprechen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

In der Zeichnung zeigen:
- Fig. 1: eine schematische Darstellung einer erfindungsgemäßen Vorrichtung mit von einer Messzone der Vorrichtung ausgehenden Strahlenbündeln,
- Fig. 2: eine schematische Darstellung der relativen Lage von mit zwei Kameraeinrichtungen der Vorrichtung aus Fig. 1 aufgenommenen Messbereichen der Messzone,
- Fig. 3: eine alternative Ausführungsform einer erfindungsgemäßen Vorrichtung,
- Fig. 4: eine schematische Darstellung der relativen Lage von mit drei Kameraeinrichtungen der Vorrichtung aus Fig. 3 aufgenommenen Messbereichen der Messzone,
- Fig. 5: eine weitere alternative Ausführungsform einer erfindungsgemäßen Vorrichtung,
- Fig. 6: eine schematische Darstellung der relativen Lage von mit vier Kameraeinrichtungen der Vorrichtung aus Fig. 5 aufgenommenen Messbereichen der Messzone,
- Fig. 7: eine weitere alternative Ausführungsform einer erfindungsgemäßen Vorrichtung,
- Fig. 8: eine weitere alternative Ausführungsform einer erfindungsgemäßen Vorrichtung,
- Fig. 9: eine weitere alternative Ausführungsform einer erfindungsgemäßen Vorrichtung,
- Fig. 10: eine schematische Darstellung des zeitlichen Verlaufs der Beleuchtungsintensität zur Beleuchtung der Messzone und von Steuersignalen zur Ansteuerung von zwei Kameraeinrichtungen und
- Fig. 11: eine schematische Darstellung des Aufbaus einer nichterfindungsgemäßen Vorrichtung zur Bestimmung der Partikelgröße(n) und/oder der Partikelformen(en) von Partikeln in einem Partikelstrom.

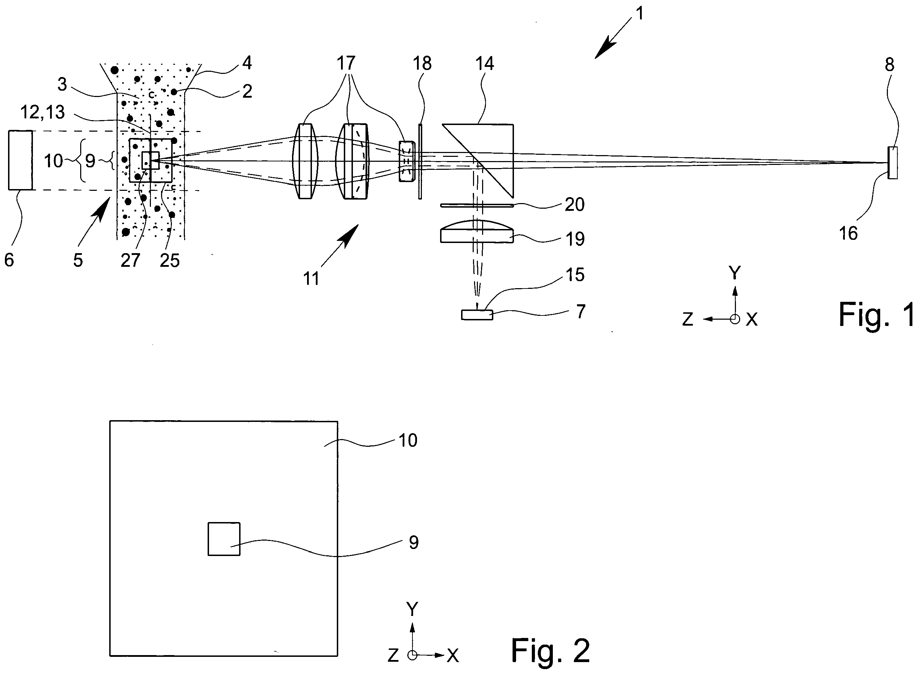

In den Fig. 1 bis 6 sind alternative Ausführungsformen einer Vorrichtung 1 zur Bestimmung der Partikelgröße und/oder der Partikelform und/oder optischer Eigenschaften, wie Transparenz, von Partikeln 2 in einem Partikelstrom 3, mit einer Zuführeinrichtung 4 zum Zuführen der Partikel 2 zu einer Messzone 5 gezeigt, wobei die Partikel 2 die Messzone 5 durchströmen. Darüber hinaus weist die Vorrichtung 1 eine Beleuchtungseinrichtung 6 zum Beleuchten der Messzone 5, wenigstens zwei Kameraeinrichtungen 7, 8, die jeweils einen der dementsprechenden Kameraeinrichtung 7, 8 zugeordneten Messbereich 9, 10 der Messzone 5 aufnehmen, eine Abbildungsoptik 11 zur Abbildung der Messbereiche 9, 10 und eine nicht dargestellte Auswertungseinrichtung zur Bestimmung der Partikelgröße und/oder der Partikelform und/oder optischer Eigenschaften, wie Transparenz, aus den Aufnahmen der Messbereiche 9, 10 auf. Die eine Kameraeinrichtung 7 kann beispielsweise den größeren Messbereich 10 mit einer geringeren Vergrößerung aufnehmen, während die andere Kameraeinrichtung 8 den kleineren Messbereich 9 mit einer stärkeren Vergrößerung aufnimmt.

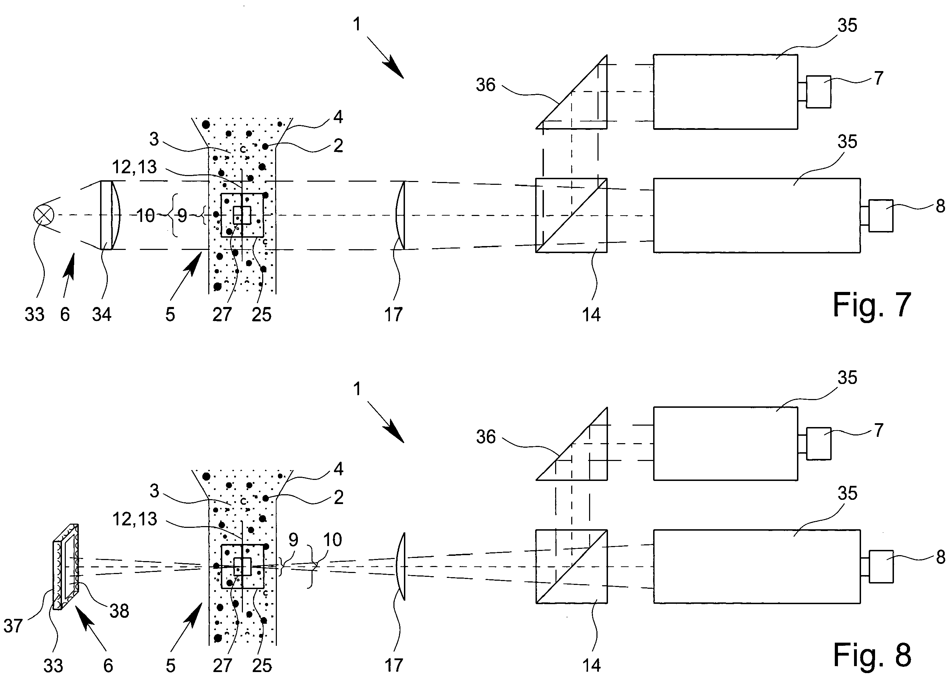

Die Beleuchtungseinrichtung 6 ist dabei derart ausgebildet, dass die Messbereiche 9, 10 der Messzone 5 stets gemeinsam beleuchtet werden, wobei der erste Messbereich 10 mit derselben Intensität beleuchtet wird wie der zweite Messbereich 9. Insbesondere unterliegt dabei die Beleuchtungsintensität im gesamten Bereich der Messbereiche 9, 10 einer homogenen Verteilung. Hierauf wird im weiteren Verlauf im Zusammenhang mit den Figuren 7 bis 9 näher eingegangen.

Abhängig von der Position der Kameraeinrichtungen 7, 8 und dem Aufbau und der Anordnung der optischen Komponenten der Abbildungsoptik 11 befinden sich die Messbereiche 9, 10 in parallelen Objektebenen 12, 13. Vorzugsweise fallen die Objektebenen 12,13 in einer gemeinsamen Ebene zusammen. Die von der Messzone 5 bzw. den Messbereichen 9, 10 ausgehenden Strahlenbündel verlaufen bis zu einem optischen Element 14 der Abbildungsoptik 11 streckenweise parallel zu einer optischen Achse. Dies ist in den Figuren 1 bis 6 lediglich schematisch gezeigt.

An dem optischen Element 14 wird die von der Messzone 5 ausgehende Lichtstrahlung in zwei Strahlungsteile aufgeteilt, wobei die Intensität der Strahlungsteile nicht identisch sein muss und die Strahlungsteile insbesondere spektralgleich sein können. Die Objektebenen 12, 13 werden durch die Abbildungsoptik 11 jeweils in zwei vorzugsweise nicht parallele Bildebenen 15, 16 abgebildet. In den Bildebenen 15, 16 befinden sich die Bildsensoren der Kameraeinrichtungen 7, 8. Zwischen der Messzone 5 und dem optischen Element 14 einerseits und dem optischen Element 14 und der jeweiligen Kameraeinrichtung 7, 8 andererseits sind optische Komponenten der Abbildungsoptik 11, insbesondere Linsen 17 und Aperturblenden 18, vorgesehen. Der beschriebene Aufbau der erfindungsgemäßen Vorrichtung 1 ermöglicht die Bestimmung der Partikelgröße und/oder -form mit einer hohen Genauigkeit bei einem hohen dynamischen Messbereich, wobei der Justageaufwand bei der Kalibration der Vorrichtung aufgrund der in parallelen oder vorzugsweise zusammenfallenden Objektebenen 12, 13 angeordneten Messbereiche 9, 10 gering ist.

Durch zusätzliche optische Komponenten der Abbildungsoptik 11, beispielsweise wenigstens eine zusätzliche Linse 19 und ggf. wenigstens eine zusätzliche Aperturblende 20, zwischen dem optischen Element 14 und der Kameraeinrichtung 7 ergeben sich unterschiedliche Abbildungsmaßstäbe für die Aufnahmen der Messbereiche 9, 10 durch die Kameraeinrichtungen 7, 8. Bei gleicher Größe der Bildsensoren der Kameraeinrichtungen 7, 8 ergeben sich daraus zwei unterschiedlich große Messbereiche 9, 10. Der kleinere Messbereich 9, der mit stärkerer Vergrößerung aufgenommen wird, liegt dabei, wie in Fig. 2 dargestellt, innerhalb des größeren Messbereiches 10, der mit geringerer Vergrößerung aufgenommen wird. Vorzugsweise liegt der kleinere Messbereich 9 in der Mitte des größeren Messbereiches 10. Alternativ können jedoch auch andere relative Positionierungen der Messbereiche 9, 10, beispielsweise eine randseitige Lage des Messbereichs 9 im Messbereich 10, vorgesehen sein.

Die von der Messzone 5 auf das optische Element 14 auftreffende Lichtstrahlung wird durch das optische Element 14 derart in zwei Strahlungsteile aufgeteilt, dass der kleinere Messbereich 9 mit einer höheren Intensität als der größere Messbereich 10 ausgeleuchtet wird. Das Verhältnis der Intensitätsaufteilung auf die beiden Strahlungsteile wird dabei vorzugsweise so gewählt, dass gleiche Verstärkungseinstellungen bzw. Gain-Werte für beide Kameraeinrichtungen 7, 8 verwendet werden können.

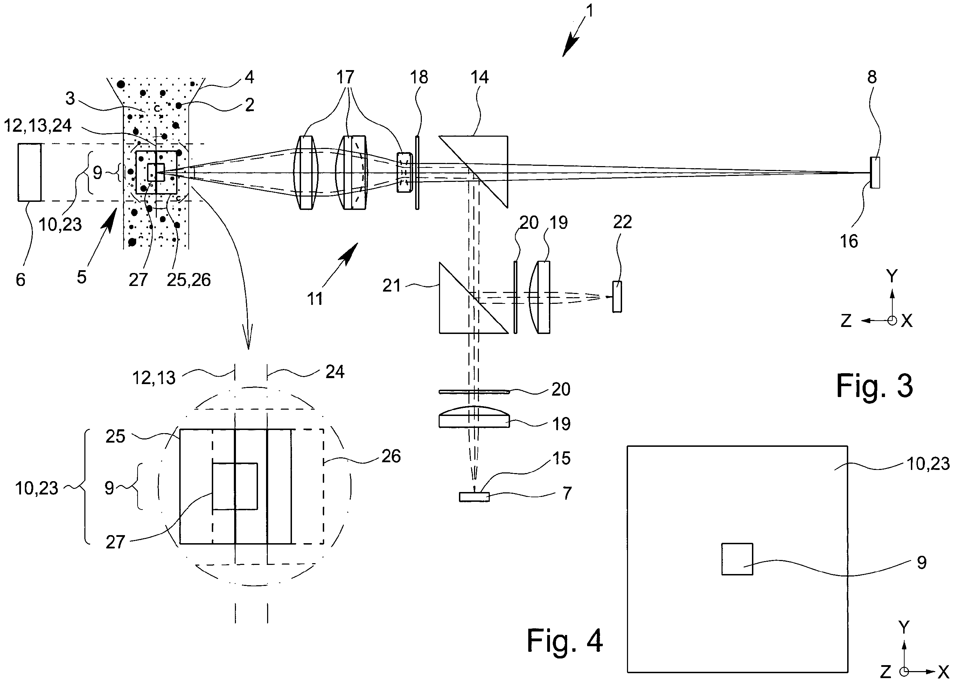

Bei der in Fig. 3 gezeigten alternativen Ausführungsform der erfindungsgemäßen Vorrichtung 1 ist ein weiteres optisches Element 21 zur Aufteilung eines an dem ersten optischen Element 14 erzeugten Strahlungsteils in zwei weitere Strahlungsteile und eine weitere Kameraeinrichtung 22 vorgesehen. Mit den drei Kameraeinrichtungen 7, 8, 22 werden insgesamt drei Messbereiche 9, 10, 23 aufgenommen. Die Messbereiche 9, 10, 23 sind in drei Objektebenen 12, 13, 24 angeordnet, wobei die Objektebenen 12, 13, 24 parallel zueinander angeordnet sein können oder wobei wenigstens zwei Objektebenen 12 ,13, 24 zusammenfallen können.

Vorliegend werden zwei Messbereiche 10, 23 von den Kameraeinrichtungen 7, 22 mit gleicher Vergrößerung aufgenommen. Diese größeren Messbereiche 10, 23 liegen dabei vorzugsweise in parallelen Objektebenen 13, 24, die in Richtung der optischen Achse voneinander beabstandet sind. Der kleinere Messbereich 9 wird mit einer stärkeren Vergrößerung aufgenommen und liegt in der Objektebene 12, die mit der Objektebene 13 des größeren Messbereiches 10 zusammenfällt. Die Messvolumina 25, 26 der beiden größeren Messbereiche 10, 23 gehen dabei ineinander über, so dass sich ein breiter Bereich mit für die Auswertung ausreichender Abbildungsschärfe ergibt. Dadurch kann die Detektionswahrscheinlichkeit für kleine Partikel erhöht werden, was zu einer besseren Übereinstimmung der Auswertungsstatistik mit der tatsächlichen Partikelgrößenverteilung führt. Das Messvolumen 27 des kleineren Messbereiches 9 liegt vorzugsweise innerhalb von einem Messvolumen 25, 26 wenigstens eines der beiden größeren Messbereiche 10, 23.

Alternativ können die Objektebenen 13, 24, in denen die größeren Messbereiche 10, 23 liegen, auch zusammenfallen. Durch den Einsatz entsprechend ausgebildeter unterschiedlicher Kameraeinrichtungen 7, 22, eine entsprechende Ausgestaltung des optischen Elements 21 und/oder etwaiger weiterer, den Kameraeinrichtungen 7, 22 zugeordneter optischer Komponenten der Abbildungsoptik 11, beispielsweise Filter, wird zusätzlich zur räumlichen Abbildung beispielsweise der Zugang zu spektralen bzw. chromatischen Informationen ermöglicht.

Es versteht sich, dass alternativ lediglich wenigstens ein optisches Element in ähnlicher Weise wie zuvor beschrieben im Strahlengang zur Kameraeinrichtung 8 vorgesehen sein kann, so dass der vom ersten optischen Element 14 ausgehende und der Kameraeinrichtung 8 zugeordnete Strahlungsteil in zwei Strahlungsteile zerlegt wird.

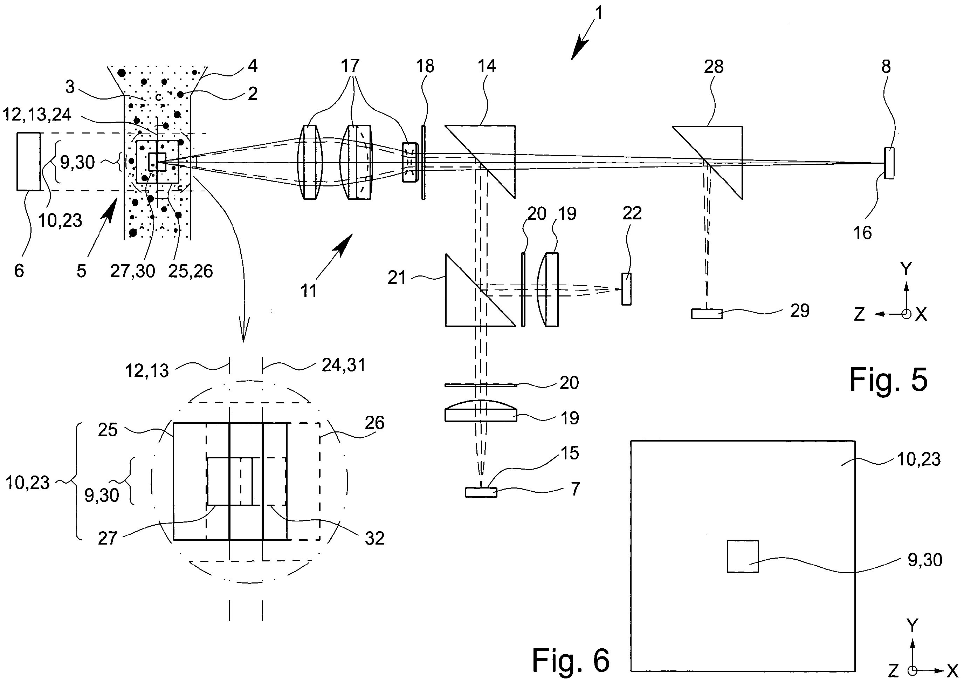

Bei einer weiteren, alternativen in Fig. 5 dargestellten Ausführungsform der erfindungsgemäßen Vorrichtung 1 weist die Abbildungsoptik 11 drei optische Elemente 14, 21, 28 sowie vier Kameraeinrichtungen 7, 8, 22, 29 auf. Hierdurch ergeben sich vier den Kameraeinrichtungen 7, 8, 21, 29 zugeordnete Messbereiche 9, 10, 23, 30. Vorzugweise nehmen dabei zwei Kameraeinrichtungen 8, 29 gleich große kleinere Messbereiche 9, 30 mit gleicher stärkerer Vergrößerung auf und die beiden anderen Kameraeinrichtungen 7, 22 gleich große größere Messbereiche 10, 23 mit gleicher geringerer Vergrößerung auf.

Vorliegend sind jeweils zwei mit gleicher Vergrößerung von den Kameraeinrichtungen 7, 22 bzw. 8, 29 aufgenommene Messbereiche 10, 23 bzw. 9, 30 in Objektebenen 12, 13, 24, 31 angeordnet, wobei die Objektebenen 13, 24, in denen die größeren Messbereiche 10, 23 liegen, und die Objektebenen 12, 31, in denen die kleineren Messbereiche 9, 30 liegen, jeweils in Richtung der optischen Achse voneinander beabstandet sind. Die Messvolumina 25, 26 der beiden größeren Messbereiche 10, 23 gehen dabei ineinander über. Das Gleiche gilt für die Messvolumina 27, 32 der beiden kleineren Messbereiche 9, 30. Dadurch werden breite durchgehende Bereiche mit für die Auswertung ausreichender Abbildungsschärfe für beide Messbereichspaarungen erzielt. Dadurch kann wiederum die Detektionswahrscheinlichkeit für kleine Partikel erhöht und es kann gleichzeitig ein großer dynamischer Messbereich erreicht werden. Die Messvolumina 27, 32 der kleineren Messbereiche 9, 30 liegen vorzugsweise innerhalb der Messvolumina 25, 26 der beiden größeren Messbereiche 10, 23.

Es ist darüber hinaus möglich, dass jeweils zwei mit gleicher Vergrößerung aufgenommene Messbereiche 9, 30 bzw. 10, 23 in Objektebenen 12, 31 bzw. 13, 24 liegen, die zusammenfallen. Hierdurch wird wiederum zusätzlich zur räumlichen Abbildung beispielsweise der Zugang zu spektralen bzw. chromatischen Informationen ermöglicht.

Vorzugsweise fallen die Objektebenen 13, 24 der größeren Messbereiche 10, 23 und die Objektebenen 12, 31 der kleineren Messbereiche 9, 30 jeweils zusammen. Im Ergebnis liegen damit die Objektebenen 12, 13, 24, 31 aller Messbereiche 9, 10, 23, 30 in einer gemeinsamen Ebene.

Bei einer Übereinstimmung der Messvolumina 27, 32 bzw. 25, 26 der jeweils mit gleicher Vergrößerung aufgenommenen Messbereiche 9, 30 bzw. 10, 23 ist es möglich, durch den Einsatz entsprechend ausgebildeter unterschiedlicher Kameraeinrichtungen 8, 29 bzw. 7, 22, eine entsprechende Ausgestaltung der optischen Elemente 21, 28 und/oder etwaiger weiterer, den Kameraeinrichtungen 8, 29 bzw. 7, 22 zugeordneter optischer Komponenten der Abbildungsoptik 11, beispielsweise Filter, zusätzlich zur räumlichen Abbildung spektrale bzw. chromatische Informationen zu erhalten, während gleichzeitig ein großer dynamischer Messbereich gewährleistet ist.

Bei der in Fig. 7 gezeigten Ausführungsform der erfindungsgemäßen Vorrichtung ist eine Beleuchtungseinrichtung 6 mit einer nahezu punktförmigen Strahlungsquelle 33 vorgesehen, die Licht zunächst isotrop, d.h. in alle Raumrichtungen gleichermaßen, emittiert. Ein Teil des von der Strahlungsquelle 33 abgegebenen Lichts wird durch eine Kollimatorlinse 34 parallelisiert. Dadurch ergibt sich im Bereich der Messzone 5 eine homogene Beleuchtung der Probe mit im Wesentlichen parallelen Strahlungsverlauf.

Die Messbereiche 9, 10 werden stets gemeinsam beleuchtet, wobei der erste Messbereich 9 mit derselben Intensität beleuchtet wird wie der zweite Messbereich 10. Bei der Strahlungsquelle 33 handelt es sich insbesondere um eine LED, bevorzugt um eine Hochleistungs-LED.

Die Strahlungsquelle 33 kann grundsätzlich Licht in jedem Wellenlängenbereich emittieren, der von den Kameraeinrichtungen 7, 8 detektierbar ist. Es ist dabei sowohl möglich, eine Weißlicht-LED mit einem vergleichsweise breiten Emissionsspektrum zu verwenden als auch eine LED, die Licht einer bestimmten Farbe, d.h. in einem begrenzten Wellenlängenbereich, emittiert. Möglich ist zudem der Einsatz einer mehrfarbig emittierenden LED, insbesondere einer RGB-LED, so dass die Farbe des abgegebenen Lichts wählbar oder einstellbar ist.

Das von der Messzone 5 in Richtung der Kameraeinrichtungen 7, 8 verlaufende Licht passiert bei dem in Fig. 7 gezeigten Ausführungsbeispiel eine optionale Linse 17 zwischen der Messzone 5 und dem optischen Element 14. Die Linse 17 stellt hierbei ein gemeinsames optisches Element der Abbildungsoptik 11 für beide Beobachtungskanäle dar. D.h. die Linse 17 ist in diesem Fall beiden Kameraeinrichtungen 7, 8 zugeordnet. Je nach Ausgestaltung der Linse 17 lässt sich die Abbildung in einer gewünschten Weise beeinflussen.

Neben einer allgemein fokussierenden oder defokussierenden Eigenschaft, vorzugsweise mit vergleichsweise großer Brennweite, kann die Linse 17 insbesondere zur Korrektur von Abbildungsfehlern ausgestaltet sein.

Nach dem Durchlauf durch das optische Element 14 gelangt das Licht von der Messzone 5 zu den Kameraeinrichtungen 7, 8 mit jeweils eigener, vorgeschalteter Abbildungsoptik, die in vorliegender Darstellung innerhalb eines Tubus 35 untergebracht ist und nicht im Detail dargestellt ist.

Im Fall der ersten Kameraeinrichtung 7 durchläuft das Licht zusätzlich einen Umlenkspiegel 36, so dass beide Kameraeinrichtungen 7, 8 zusammen mit den Tuben 35 mit der innenliegenden Abbildungsoptik parallel zueinander bzw. benachbart angeordnet werden können. Hieraus ergibt sich ein kompakter Aufbau der erfindungsgemäßen Vorrichtung.

Bevorzugt wird die Beleuchtungseinrichtung 6 gepulst betrieben, so dass sich eine stroboskopische Beleuchtung der Messzone ergibt. Durch abwechselnde Beleuchtung der Messzone mit Pulsen höherer Intensität und Pulsen geringerer Intensität, bzw. Pulsen längerer und kürzerer Dauer, lässt sich die Messzone 5 unterschiedlich stark beleuchten, während gleichzeitig die Messbereiche 9, 10 stets gemeinsam und im gleichen Moment mit derselben Intensität beleuchtet werden.

Durch eine entsprechende Steuerung, insbesondere eine Synchronisation, der Kameraeinrichtungen 7, 8 mit der beleuchteten Einrichtung 6 wird erreicht, dass jede der Kameraeinrichtungen 7, 8 entsprechend ihrer Vergrößerung ausreichend stark belichtet wird. In diesem Fall kann das optische Element 14 eine Aufteilung der einfallenden Lichtstrahlung in Strahlungsteile gleicher Intensität, d.h. im Verhältnis 50:50, bewirken.

Im Fall einer vergleichenden Untersuchung von Partikeln, die sowohl im Bild der ersten Kameraeinrichtung 7 als auch im Bild der zweiten Kameraeinrichtung 8 auftreten, kann die Beleuchtungseinrichtung 6 auch Pulse gleicher Länger und Intensität abgeben, mittels derer die Messbereiche 9, 10 gemeinsam und mit gleicher Intensität beleuchtet werden. Hierdurch lässt sich die räumliche Position der mit der zweiten Kameraeinrichtung 8 detektierten Partikel im von der ersten Kameraeinrichtung 7 aufgenommenen größeren Messbereich 10 gewährleisten. Für eine ausreichende Belichtung des Chips der zweiten Kameraeinrichtung 8 kann am optischen Element 14 die Aufteilung der einfallenden Lichtstrahlung in zwei Strahlungsteile unterschiedlicher Intensität erfolgen. Dadurch kann der zweiten Kameraeinrichtung 8, die den zweiten, kleineren Messbereich 9 mit stärkerer Vergrößerung aufnimmt, ein größerer Anteil der Gesamtintensität zugeordnet werden, so dass die Belichtung ausreichend stark für eine Auswertung des Bildes erfolgt.

Die in Fig. 8 gezeigte Ausführungsform der erfindungsgemäßen Vorrichtung entspricht vom Aufbau her im Wesentlichen der in Fig. 7 dargestellten Ausführungsform. Die Unterschiede betreffen die Beleuchtungseinrichtung 6, die gemäß Fig. 8 als Flächenlichtquelle 37 ausgebildet ist. Die Flächenlichtquelle 37 weist in der vorliegenden Form eine Vielzahl innenliegender, einzelner Strahlungsquellen 33 auf. Durch eine Streuscheibe 38, welche die Strahlungsquellen 33 auf der der Messzone 5 zugewandten Seite der Flächenlichtquelle 37 bedeckt und in der Regel aus einem lichtdurchlässigen, aber undurchsichtigen Material besteht oder dieses aufweist.

Von den Strahlungsquellen 33 abgegebene Lichtstrahlung kann die Streuscheibe 38 zwar passieren, wird jedoch in seiner Ausbreitungsrichtung durch Streuung zufällig verändert, so dass eine Emission von Licht ungerichtet und vorzugsweise homogen über die gesamte Fläche der Streuscheibe 38 erfolgt. Durch die Verwendung einer solchen Flächenlichtquelle 37 mit ausreichender Größe lässt sich der Bildhintergrund aus der Beobachtungsrichtung der Kameraeinrichtungen 7, 8 gesehen gleichmäßig ausleuchten, so dass zu detektierende Partikel im Bereich der Messzone 5 mit hohem Kontrast und scharfen Umrissen beobachtet werden können.

Alternativ zu einer Flächenlichtquelle 37 mit dem zuvor beschriebenen Aufbau lässt sich alternativ auch eine Elektrolumineszenzfolie für denselben Zweck einsetzen.

Ebenso wie die Beleuchtungseinrichtung 6 bei der in Fig. 7 gezeigten Ausführungsform lässt sich auch die in Fig. 8 dargestellte Flächenlichtquelle 37 gepulst betreiben. Die Aussagen bzgl. unterschiedlicher Pulsintensitäten und/oder -dauern gelten in diesem Fall analog.

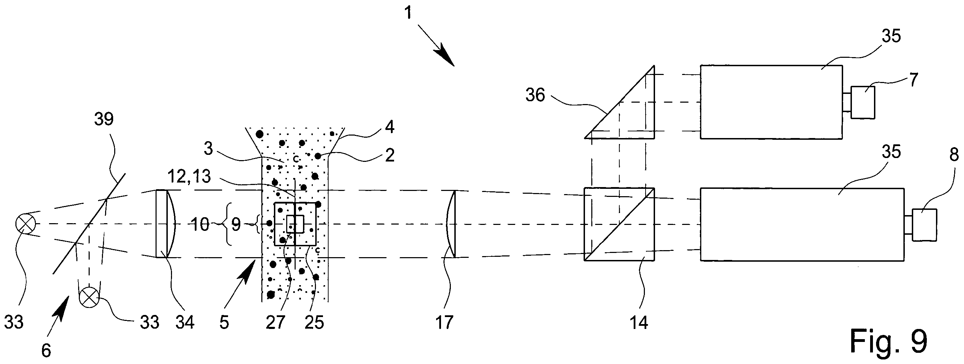

Das in Fig. 9 gezeigte Ausführungsbeispiel entspricht vom Aufbau her den Ausführungsbeispielen gemäß den Figuren 7 und 8 von der Messzone 5 strahlabwärts. Die Beleuchtungseinrichtung 6 weist im vorliegenden Fall zwei einzelne, nahezu punktförmige Strahlungsquellen 33 auf. Das von den Strahlungsquellen 33 abgegebene Licht wird durch einen teiltransparenten Spiegel 39 zum Teil vereinigt und durch eine Kollimatorlinse 34 gemeinsam parallelisiert, so dass sich im weiteren Verlauf eine Strahlgeometrie entsprechend dem Ausführungsbeispiel gemäß Fig. 7 ergibt. Durch die Verwendung von zwei einzelnen Strahlungsquellen 33 lässt sich beispielsweise die Ansteuerung der Beleuchtungseinrichtung 6 für eine stroboskopische Beleuchtung mit abwechselnden Pulsen unterschiedlicher Intensität und/oder Dauer vereinfachen.

Beispielsweise können zwei Strahlungsquellen 33 mit gleichem Emissionsspektrum, jedoch unterschiedlicher Leistung von einer vergleichsweise simplen Trigger-Elektronik abwechselnd angesteuert werden, so dass sich eine gemeinsame Beleuchtung der Messbereiche 9, 10 mit für die Messbereiche 9, 10 jeweils gleicher, jedoch im zeitlichen Verlauf abwechselnd starker Intensität ergibt.

Das optische Element 14 teilt in diesem Fall, ähnlich wie im Ausführungsbeispiel gemäß Fig. 7 die von der Messzone 5 aus einfallende Lichtstrahlung in zwei Strahlungsteile gleicher Intensität auf. Durch eine Synchronisation jeder der Kameraeinrichtungen 7, 8 zu jeweils einer Strahlungsquelle 33 der Beleuchtungseinrichtung 6 mittels der Trigger-Elektronik wird gewährleistet, dass die Aufnahme eines Bildes jeweils unter einer Beleuchtung der Messbereiche 9, 10 mit einer Lichtmenge erfolgt, die an die optischen und elektronischen Aufnahmeparameter der Kameraeinrichtung 7, 8 jeweils angepasst ist.

Die Verwendung von zwei Strahlungsquellen 33 ermöglicht darüber hinaus auch die Beleuchtung der Messbereiche 9, 10 mit Licht verschiedener Wellenlänge. Dazu können die Strahlungsquellen 33 der Beleuchtungseinrichtung 6 unterschiedliche Emissionsspektren aufweisen. Das optische Element 14 teilt in diesem Fall die einfallende, polychromatische Lichtstrahlung wellenmengenabhängig in wenigstens zwei Strahlungsteile. Diese Strahlungsteile können grundsätzlich die gleiche oder unterschiedliche Intensitäten aufweisen.

Die beiden Strahlungsquellen 33 der Beleuchtungseinrichtung 6 lassen sich zum einen in der beschriebenen Weise abwechselnd ansteuern, um die Messzone 5 abwechselnd pulsweise mit Licht der unterschiedlichen Strahlungsquellen 33 zu beleuchten. Alternativ versteht es sich, dass die Strahlungsquellen 33 auch gemeinsam angesteuert werden können und somit die Messbereiche 9, 10 gemeinsam beleuchten. Die Intensitäten der von den Strahlungsquellen 33 jeweils abgegebenen Lichtstrahlung addieren sich in diesem Fall zu einer Gesamtintensität, mit der die Messbereiche 9, 10 gemeinsam beleuchtet werden.

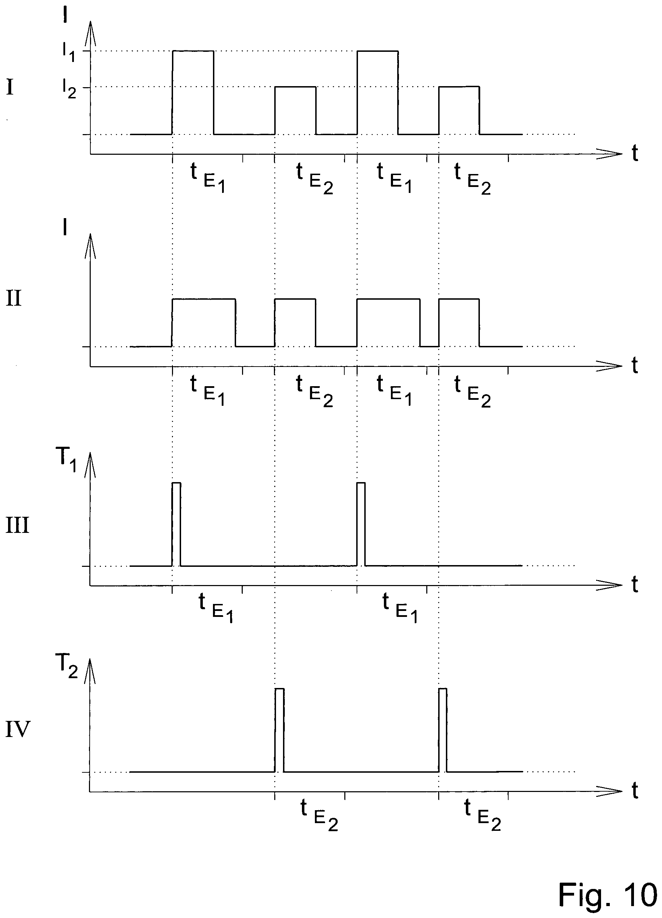

Die Synchronisation der Kameraeinrichtungen 7, 8 mit der Beleuchtungseinrichtung 6 lässt sich anhand der in Fig. 10 im gemeinsamen zeitlichen Verlauf dargestellten Signale I bis IV nachvollziehen.

Bei der von der Beleuchtungseinrichtung 6 abgegebenen Intensität I im zeitlichen Verlauf gemäß Diagramm I sind abwechselnd aufeinanderfolgende Lichtimpulse gleicher Länge, jedoch mit jeweils unterschiedlicher Intensität erkennbar. Im Vergleich dazu zeigen die Diagramme III und IV die Trigger-Signale zur Ansteuerung der verschiedenen Kameraeinrichtungen 7, 8 im zeitlichen Verlauf.

Durch die Ansteuerung der Kameraeinrichtung 8, die den kleineren Messbereich 9 einer stärkeren Vergrößerung aufnimmt, mit dem Trigger-Signal T₁ gemäß der Darstellung in Diagramm III wird synchron zu jedem Lichtimpuls mit einer höheren Intensität I₁ die Aufnahme eines Bildes mit einer bestimmten Belichtungszeit t_{E1} ausgelöst. Durch die Ansteuerung der Kameraeinrichtung 7, die den größeren Messbereich 10 mit geringerer Vergrößerung aufnimmt, mit einem Trigger-Signal T₂ mit einem zeitlichen Verlauf gemäß Diagramm IV wird jeweils die Aufnahme eines Bildes mit einer Belichtungszeit t_{E2} mittels der Kameraeinrichtung 7 veranlasst. Diese Aufnahme ist ihrerseits synchron zu den Lichtimpulsen mit einer geringeren Intensität I₂ gemäß Diagramm I.

Alternativ lässt sich die gepulste Beleuchtung der Messzone 5 auch mit Lichtimpulsen gleicher Intensität, aber unterschiedlicher Länge, realisieren. Ein beispielhafter Verlauf der von der Beleuchtungseinrichtung 6 abgegebenen Lichtintensität I ist im gemeinsamen zeitlichen Verlauf mit den Diagrammen I, III und IV in Diagramm II wiedergegeben.

Durch die Ansteuerung der Kameraeinrichtung 8, die den kleineren Messbereich 9 mit der geringeren Vergrößerung aufnimmt, entsprechend dem zeitlichen Signalverlauf gemäß Diagramm III wird synchron zu den Lichtimpulsen längerer Dauer jeweils die Aufnahme eines Bildes ausgelöst. In entsprechender Weise wird die Aufnahme eines Bildes mit der Kameraeinrichtung 7, die den größeren Messbereich 10 mit geringerer Vergrößerung, durch das in Diagramm IV dargestellte Trigger-Signal T₂ synchron zu den zeitlich kürzeren Pulsen gemäß Diagramm II veranlasst.

Trotz der gleichen Maximalintensität der in Diagramm II dargestellten Lichtimpulse gelangt während der Belichtungszeit t_{E1} mehr Licht auf den Chip der mit den längeren Impulsen synchronisierten Kameraeinrichtung 8 als während der Belichtungszeit t_{E2} zum Chip der mit den kürzeren Pulsen synchronisierten Kameraeinrichtung 7 gelangt. Da die Kameraeinrichtungen 7, 8 die auf dem Sensorchip auftreffende Lichtintensität über die gesamte Belichtungszeit t_{E} integrieren, kommt es letztlich auf die Fläche unter einem Lichtimpuls an, dem der Chip der entsprechenden Kameraeinrichtung 7, 8 ausgesetzt ist. Ein helleres Bild ergibt sich daher sowohl bei einem höheren als auch bei einem längeren Impuls. Die Belichtungszeit t_{E} ist bei üblicherweise verwendeten Kameraeinrichtungen deutlich größer als die maximal sinnvolle Beleuchtungsdauer bei der stroboskopischen Beleuchtung von schnell bewegten Objekten, wie beispielsweise Partikeln 2 in einem Partikelstrom 3.

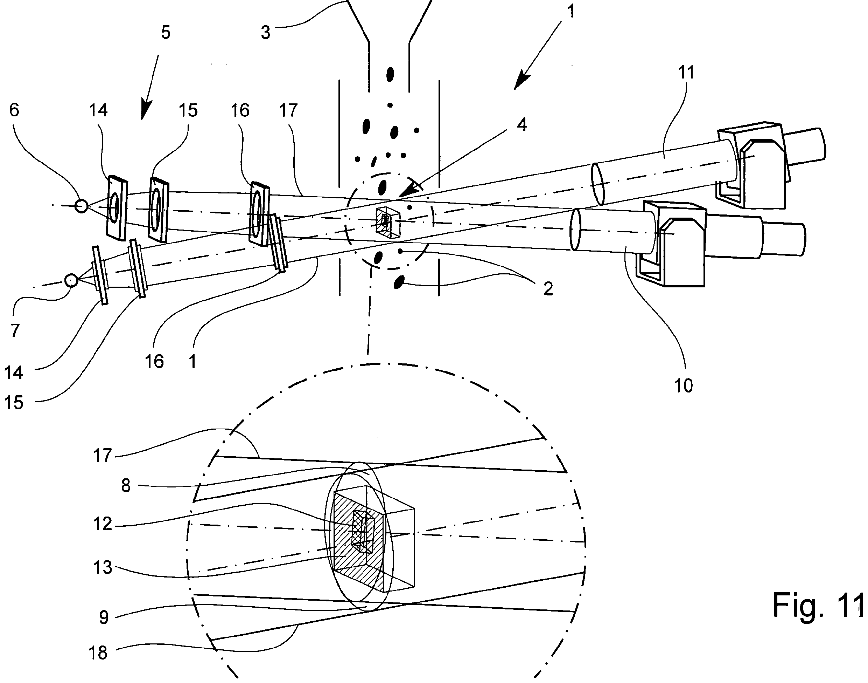

In der Figur 11 ist eine nicht-erfindungsgemäßen Vorrichtung 1 zur Bestimmung der Partikelgröße und/oder der Partikelform von Partikeln 2 in einem Partikelstrom gezeigt, wobei die Partikel 2 mit einer Zuführeinrichtung 3 einer Messzone 4 zugeführt werden. Anschließend durchströmen die Partikel 2 die Messzone 4. Die Zuführeinrichtung 3 ist lediglich schematisch gezeigt und kann einen Trichter aufweisen, an den eine Zuführrinne anschließt. Die Zuführeinrichtung 3 kann auf einem Unterbau ruhen, der eine Justiereinrichtung aufweist, mit welcher insbesondere die Zuführrinne in der Horizontalen, und zwar quer zu dem von der Zuführrinne fallenden Partikelstrom, ausgerichtet werden kann. Unterhalb des Unterbaus kann ein Auffangbehälter zum Auffangen des Partikelstroms angeordnet sein.

Die Messzone 4 ist für die nachfolgend noch näher erläuterte Beleuchtungsstrahlung transparent. Die Beleuchtung der Messzone 4 erfolgt mit einer Beleuchtungseinrichtung 5, die zwei Lichtquellen 6, 7 aufweist, die übereinstimmende Strahlungsleistungen abgeben. Die erste Lichtquelle 6 beleuchtet ein erstes Beleuchtungsfeld 8 der Messzone 4, während die zweite Lichtquelle 7 ein zweites Beleuchtungsfeld 9 der Messzone 4 be- bzw. ausleuchtet. Die Beleuchtungsfelder 8, 9 sind lediglich schematisch gezeigt.

Darüber hinaus sind zwei Kameraeinrichtungen 10, 11 vorgesehenen, um zwei Messbereiche 12, 13 bzw. Bilderfassungsflächen der Messzone 4 digital in Form von durch die Projektionsflächen der Partikel in der jeweiligen Kameraeinrichtung abgedeckten Bildpunkten aufzunehmen. Die Messbereiche 12, 13 liegen in den Ebenen der Beleuchtungsfelder 8, 9.

Eine in der Figur nicht gezeigte Auswertungseinrichtung dient zur Bestimmung der Partikelgrößen und/oder der Partikelformen aus den Aufnahmen der Messbereiche 12, 13, was dem Fachmann aus dem Stand der Technik, insbesondere der DE 198 02 141 C1 und/oder der EP 1 972 921 A1, bekannt ist.

Bei der Vorrichtung 1 werden zwei Kameraeinrichtungen 10, 11 vorgesehen, um den Dynamikbereich der Messung, d. h. den Bereich der messbaren Partikelgrößen zu erhöhen. Die eine Kameraeinrichtung 10 nimmt einen ersten, vorzugsweise kleineren, Messbereich 12 mit einer stärkeren Vergrößerung auf, während die andere Kameraeinrichtung 11 einen anderen, vorzugsweise größeren Messbereich 13 mit einer geringeren Vergrößerung aufnimmt. Die Kameraeinrichtungen 10 sind schematisch gezeigt und weisen unterschiedliche Objektive auf.

Wie sich aus der Figur weiter ergibt, liegt der stärker vergrößerte Messbereich 12 in dem ersten Beleuchtungsfeld 8, während der weniger stark vergrößerte Messbereich 13 in dem zweiten Beleuchtungsfeld 9 liegt. Beispielsweise kann die Kameraeinrichtung 10 den stärker vergrößerten Messbereich 12 mit 8-facher Vergrößerung aufnehmen, während die Kameraeinrichtung 11 den weniger stark vergrößerten Messbereich 13 mit 2-facher Vergrößerung aufnimmt.

Um die Möglichkeit einer einfachen, insbesondere kundenspezifischen Anpassung des Abbildungsmaßstabes bei der Aufnahme von wenigstens einem Messbereich 12, 13, insbesondere bei der Aufnahme des Messbereiches 12 mit der stärkeren Vergrößerung, an unterschiedliche Partikelgrößen der Partikel 2 zu ermöglichen, erfolgt die Beleuchtung der beiden Beleuchtungsfelder 8, 9 mit übereinstimmender, vorzugsweise identischer, Intensität. Hierbei ist die Intensität der Beleuchtung beider Beleuchtungsfelder 8, 9 auf eine bestimmte Vergrößerung des stärker vergrößerten Messbereiches 12 eingestellt und kann bei einer Änderung des Abbildungsmaßstabes einer Kameraeinrichtung 10, 11 oder auch der Abbildungsmaßstäbe beider Kameraeinrichtungen 10, 11 beibehalten werden. Mit anderen Worten wird jedes Beleuchtungsfeld mit einer übereinstimmenden Intensität ausgeleuchtet, die erforderlich ist, um scharfe und kontrastreiche Aufnahmen der Partikel 2 in einem Messbereich 12, 13 bei einer bestimmten, beispielsweise 4-fachen, 8-fachen, 10-fachen, 12- fachen oder 20-fachen Vergrößerung durch die jeweilige Kameraeinrichtung 10, 11 zu erreichen. Die Höhe der Beleuchtungsintensität ist an einen bestimmten Abbildungsmaßstab einer der beiden Kameraeinrichtungen 10, 11 angepasst. Insbesondere ist nicht vorgesehen, für jeden Messbereich 12, 13 eine optimale Intensität in Abhängigkeit von der Vergrößerung durch die jeweilige Kameraeinrichtung 10, 11 und/oder Apertur des Objektives der jeweiligen Kameraeinrichtung 10, 11 einzustellen.

Wie sich weiter aus der Figur ergibt, sind zwischen den Lichtquellen 6, 7 und der Messzone 4 jeweils gleich ausgebildete Linsensysteme mit einer Mehrzahl von Linsen 14-16 zur Erzeugung näherungsweise achsparalleler Strahlenbündel 17, 18 vorgesehen. Damit werden zwischen den Lichtquellen 6, 7 und der Messzone 4 identische Beleuchtungsstrahlengänge verwirklicht, um eine übereinstimmende Beleuchtungsintensität bei der Beleuchtung der Beleuchtungsfelder 8, 9 zu gewährleisten.

Die Lichtquellen 6, 7 können aus einer oder mehrerer lichtemittierender Dioden bestehen. Für den Fall, dass mehrere LEDs zum Einsatz kommen, kann zusätzlich ein Diffusorelement vorgesehen sein. Die erste Linse 14 des Linsensystems kann eine Konkav-Konvex-Linse mit einer Brennweite von beispielsweise f = +50 mm sein. Die zweite Linse 15 und die dritte Linse 16 können als Plan-Konkav-Linsen mit einer Brennweite von beispielsweise f = +50 mm und f = +100 mm ausgebildet sein. Der Abstand zwischen den punktförmigen Lichtquellen 6, 7 und der ersten Linse 14 ist vergleichsweise kurz und kann weniger als 20 mm, beispielsweise 7 bis 8 mm, betragen. Da die zum Einsatz kommenden LEDs große Abstrahlwinkel aufweisen, kann mit den beschriebenen Linsensystemen der größte Teil des abgestrahlten Lichtes zur Ausleuchtung der Beleuchtungsfelder 8, 9 genutzt werden. Nach der dritten Linse 16 sind die Strahlenbündel 17, 18 näherungsweise achsparallel zur optischen Achse ausgerichtet und es kann ein Beleuchtungsfeld 8, 9 jeweils mit einem Durchmesser von beispielsweise 30 mm homogen ausgeleuchtet werden. Die Größe der Beleuchtungsfelder 8, 9 vereinfacht die Justierung der Kameraeinrichtungen 10, 11, was insbesondere für die Kameraeinrichtung 10 zutrifft, die den kleineren Messbereich 12 mit einem höheren Abbildungsmaßstab aufnimmt. Die Größe der Messbereiche 12, 13 bzw. die Größe der Bilderfassungsflächen und/oder die Größe der Querschnittsflächen der Beleuchtungsfelder 8, 9 kann von den gezeigten Größen abweichen. Es versteht sich, dass die vorgenannten Linsenformen und Brennweiten der Linsen 14 bis 16 lediglich eine bevorzugte Ausführungsform betreffen.

Nicht dargestellt ist im Übrigen, dass zur Verringerung des Platzbedarfes zwischen den Lichtquellen 6, 7 und der Messzone 4 wenigstens eine gemeinsame Linse vorgesehen sein kann, durch die beide Beleuchtungsstrahlengänge verlaufen. Beispielsweise ist es möglich, dass an der Stelle der beiden dritten, letzten Linsen 17 der beiden Linsensysteme eine gemeinsame größere Meniskenlinse vorgesehen ist.

Nicht dargestellt ist ferner, dass wenigstens eine Kameraeinrichtung 10, 11 ein Intensitätskompensationsmittel, beispielsweises eine Blende, einen Filter oder ein Objektiv mit geringer Lichtempfindlichkeit, aufweisen kann, um ein Überstrahlen des Kamerasensors aufgrund einer zu hohen eingestellten Beleuchtungsintensität zu verhindern. Dies betrifft insbesondere die Kameraeinrichtung 11, die den Messbereich 13 mit geringerer Vergrößerung aufnimmt. Grundsätzlich kann ein Intensitätskompensationsmittel jedoch auch bei der Kameraeinrichtung 10 vorgesehen sein, wenn deren Abbildungsmaßstab zur Anpassung an eine bestimmte Partikelgröße verringert und die eingestellte Beleuchtungsintensität unverändert beibehalten wird.

**Bezugszeichenliste:**

| | | | |
|---|---|---|---|
| 1 | Vorrichtung | 36 | Umlenkspiegel |
| 2 | Partikel | 37 | Flächenlichtquelle |
| 3 | Partikelstrom | 38 | Streuscheibe |
| 4 | Zuführeinrichtung | 39 | teiltransparenter Spiegel |
| 5 | Messzone | | |
| 6 | Beleuchtungseinrichtung | | |
| 7 | Kameraeinrichtung | | |
| 8 | Kameraeinrichtung | | |
| 9 | Messbereich | | |
| 10 | Messbereich | | |
| 11 | Abbildungsoptik | | |
| 12 | Objektebene | | |
| 13 | Objektebene | | |
| 14 | optisches Element | | |
| 15 | Bildebene | | |
| 16 | Bildebene | | |
| 17 | Linse | | |
| 18 | Aperturblende | | |
| 19 | Linse | | |
| 20 | Aperturblende | | |
| 21 | optisches Element | | |
| 22 | Kameraeinrichtung | | |
| 23 | Messbereich | | |
| 24 | Objektebene | | |
| 25 | Messvolumen | | |
| 26 | Messvolumen | | |
| 27 | Messvolumen | | |
| 28 | optisches Element | | |
| 29 | Kameraeinrichtung | | |
| 30 | Messbereich | | |
| 31 | Objektebene | | |
| 32 | Messvolumen | | |
| 33 | Strahlungsquelle | | |
| 34 | Kollimatorlinse | | |
| 35 | Tubus | | |

## Patentansprüche

1. Vorrichtung (1) zur Bestimmung der Partikelgröße und/oder der Partikelform und/oder optischer Eigenschaften, wie Transparenz, von Partikeln (2) in einem Partikelstrom (3), mit einer Zuführeinrichtung (4) zum Zuführen der Partikel (2) zu einer Messzone (5), wobei die Partikel (2) die Messzone (5) durchströmen, mit wenigstens einer Beleuchtungseinrichtung (6) zum Beleuchten der Messzone (5), mit wenigstens zwei Kameraeinrichtungen (7, 8), die jeweils einen der dementsprechenden Kameraeinrichtung (7, 8) zugeordneten Messbereich (9, 10) der Messzone (5) aufnehmen, wobei eine erste Kameraeinrichtung (7) einen ersten, vorzugsweise größeren, Messbereich (10) mit einer ersten geringeren Vergrößerung aufnimmt und eine zweite Kameraeinrichtung (8) einen zweiten, vorzugsweise kleineren, Messbereich (9) mit einer zweiten stärkeren Vergrößerung aufnimmt, mit einer Abbildungsoptik (11) zur Abbildung der Messbereiche (9, 10) und mit einer Auswertungseinrichtung zur Bestimmung der Partikelgröße und/oder der Partikelform aus den Aufnahmen beider Messbereiche (9, 10), wobei sich die Messbereiche (9, 10) in wenigstens einer Objektebene (12, 13) befinden und die Objektebene (12, 13) durch die Abbildungsoptik (11) in wenigstens zwei Bildebenen (15, 16) abgebildet wird, in denen sich die Bildsensoren der Kameraeinrichtungen (7, 8) befinden,
**dadurch gekennzeichnet, dass** die Abbildungsoptik (11) wenigstens ein zwischen der Messzone (5) und den beiden Kameraeinrichtungen (7, 8) angeordnetes optisches Element (14) aufweist, an dem und/oder von dem die von der Messzone (5) ausgehende Lichtstrahlung in wenigstens zwei jeweils den Kameraeinrichtungen (7, 8) zugeordnete Strahlungsteile aufgeteilt wird, und dass die Beleuchtungseinrichtung (6) derart ausgebildet ist, dass der erste Messbereich (10) und der zweite Messbereich (9) stets gemeinsam beleuchtet werden, wobei der erste Messbereich (10) mit derselben Intensität beleuchtet wird wie der zweite Messbereich (9),

2. Vorrichtung nach Anspruch 1, **dadurch gekennzeichnet, dass** das optische Element (14) die einfallende, von der Messzone (5) ausgehende Lichtstrahlung in wenigstens zwei Strahlungsteile aufteilt, die mit der einfallenden Lichtstrahlung spektralgleich sind.

3. Vorrichtung nach Anspruch 1, **dadurch gekennzeichnet, dass** die Beleuchtungseinrichtung (6) wenigstens zwei Lichtquellen aufweist, die Lichtstrahlung unterschiedlicher Wellenlänge und/oder aus einem unterschiedlichen Wellenlängenbereich aussenden, wobei das optische Element (14) die einfallende, von der Messzone (5) ausgehende Lichtstrahlung wellenlängenabhängig in wenigstens zwei Strahlungsteile aufteilt.

4. Vorrichtung nach einem der vorhergehenden Ansprüche, **dadurch gekennzeichnet, dass** die Beleuchtungseinrichtung (6) zur gemeinsamen homogenen Beleuchtung der beiden Messbereiche (9, 10) ausgebildet ist.

5. Vorrichtung nach einem der vorhergehenden Ansprüche, **dadurch gekennzeichnet, dass** die Beleuchtungseinrichtung (6) zur gepulsten Beleuchtung der beiden Messbereiche (9, 10) ausgebildet ist, wobei, vorzugsweise, die Dauer und/oder Intensität wenigstens zweier Pulse unterschiedlich ist, wobei, insbesondere, ein erster Puls mit geringerer Intensität und/oder kürzerer Dauer die beiden Messbereiche (9, 10) beleuchtet, während die erste Kameraeinrichtung (7) den ersten, vorzugsweise größeren, Messbereich (10) mit einer ersten geringeren Vergrößerung aufnimmt, und ein zweiter Puls mit höherer Intensität und/oder längerer Dauer die beiden Messbereiche (9, 10) beleuchtet, während die zweite Kameraeinrichtung (8) den zweiten, vorzugsweise kleineren, Messbereich (9) mit einer zweiten stärkeren Vergrößerung aufnimmt, und wobei, bevorzugt, wenigstens eine Kameraeinrichtung (7, 8) mit der Beleuchtungseinrichtung (6) synchronisiert ist.

6. Vorrichtung nach einem der vorhergehenden Ansprüche, **dadurch gekennzeichnet, dass** die Abbildungsoptik (11) eine insbesondere zwischen der Messzone (5) und dem optischen Element (14) angeordnete Linse (17, 19) aufweist und/oder dass die Abbildungsoptik (11) wenigstens eine Linse (17, 19) mit variabler, insbesondere elektrisch veränderbarer, Brennweite aufweist.

7. Vorrichtung nach Anspruch 1, **dadurch gekennzeichnet, dass** sich die Messbereiche (9, 10) in parallelen oder zusammenfallenden Objektebenen (12, 13) befinden.

8. Vorrichtung nach Anspruch 1 oder 2, **dadurch gekennzeichnet, dass** der Abstand von zwei Objektebenen (12, 13) voneinander derart einstellbar ist, dass ein einem stärker vergrößerten Messbereich (9) zugeordnetes Messvolumen (27) vollständig in einem einem weniger stark vergrößerten Messbereich (10) zugeordneten Messvolumen (25) liegt.

9. Vorrichtung nach einem der vorhergehenden Ansprüche, **dadurch gekennzeichnet, dass** das optische Element (14) derart ausgebildet ist, dass die beiden Strahlungsteile unterschiedliche Lichtintensitäten aufweisen.

10. Vorrichtung nach einem der vorhergehenden Ansprüche, **dadurch gekennzeichnet, dass** wenigstens drei Kameraeinrichtungen (7, 8, 22) vorgesehen sind und dass die Abbildungsoptik (11) wenigstens ein weiteres optisches Element (21) aufweist, an dem ein Strahlungsteil in zwei weitere Strahlungsteile aufgeteilt wird.

11. Vorrichtung nach einem der vorhergehenden Ansprüche, **dadurch gekennzeichnet, dass** der Abstand der Objektebenen (12, 13, 24, 31) von wenigstens zwei Messbereichen (9, 10, 23, 30) voneinander derart einstellbar ist, dass ein Messvolumen (25, 27) eines Messbereichs (9, 10) und ein Messvolumen (26, 32) eines weiteren, vorzugsweise gleich großen, Messbereichs (23, 30) ineinander übergehen.

12. Vorrichtung nach einem der vorhergehenden Ansprüche, **dadurch gekennzeichnet, dass** die Abbildungsoptik (11) wenigstens zwei optische Elemente (14, 21) aufweist, wobei ein optisches Element (14) Lichtstrahlung in wenigstens zwei Strahlungsteile mit gleichem Spektrum bzw. gleicher Farbe und/oder gleicher Polarisation und ein anderes optisches Element (21) Lichtstrahlung in wenigstens zwei Strahlungsteile mit unterschiedlichen Spektren bzw. Farben und/oder unterschiedlichen Polarisationen aufteilt.

13. Vorrichtung nach einem der vorhergehenden Ansprüche, **dadurch gekennzeichnet dass** die Abbildungsoptik (11) derart ausgebildet ist, dass zur Aufnahme eines vorzugsweise identischen Messvolumens (25, 26, 27, 32) wenigstens zwei Kameraeinrichtungen (7, 8, 22, 29) vorgesehen sind, die unterschiedliche, insbesondere unterschiedlich wellenlängenabhängige, Detektionseigenschaften aufweisen.

14. Verfahren zur Bestimmung der Partikelgröße und/oder der Partikelform und/oder optischer Eigenschaften, wie Transparenz, von Partikeln (2) in einem Partikelstrom (3), wobei die Partikel (2) eine Messzone (5) durchströmen, wobei die Messzone (5) von wenigstens einer Beleuchtungseinrichtung (6) beleuchtet wird, wobei von wenigstens zwei Kameraeinrichtungen (7, 8) jeweils ein der entsprechenden Kameraeinrichtung (7, 8) zugeordneter Messbereich (9, 10) der Messzone (5) aufgenommen wird, wobei von einer ersten Kameraeinrichtung (7) ein erster, vorzugsweise größerer, Messbereich (10) mit einer ersten geringeren Vergrößerung aufgenommen wird und von einer zweiten Kameraeinrichtung (8) ein zweiter, vorzugsweise kleinerer Messbereich (9) mit einer zweiten stärkeren Vergrößerung aufgenommen wird, wobei die Messbereiche (9, 10) mittels einer Abbildungsoptik (11) abgebildet werden, wobei mittels einer Auswertungseinrichtung die Partikelgröße und/oder die Partikelform aus den Aufnahmen beider Messbereiche (9, 10) für einen hohen dynamischen Messbereich bestimmt wird, und wobei sich die Messbereiche (9, 10) in wenigstens einer Objektebene (12, 13) befinden und die Objektebene (12, 13) durch die Abbildungsoptik (11) in wenigstens zwei Bildebenen (15, 16) abgebildet wird, in denen sich die Bildsensoren der Kameraeinrichtungen (7, 8) befinden,
**dadurch gekennzeichnet dass** die von der Messzone (5) ausgehende Lichtstrahlung mittels wenigstens eines zwischen der Messzone (5) und den beiden Kameraeinrichtungen (7, 8) angeordneten optischen Elements (14) der Abbildungsoptik (11) in wenigstens zwei jeweils den Kameraeinrichtungen (7, 8) zugeordnete Strahlungsteile aufgeteilt wird, und dass der erste Messbereich (10) und der zweite Messbereich (9) stets gemeinsam beleuchtet werden, wobei der erste Messbereich (10) mit derselben Intensität beleuchtet wird wie der zweite Messbereich (9).

## Claims

1. An apparatus (1) for determining the particle size and/or the particle shape and/or the optical properties, such as transparency, of particles (2) in a particle stream (3), comprising a feed device (4) for feeding the particles (2) to a measurement zone (5), wherein the particles (2) flow through the measurement zone (5), comprising at least one illuminating device (6) for illuminating the measurement zone (5), comprising at least two camera devices (7, 8), each of which records a measurement area (9, 10) of the measurement zone (5) assigned to the corresponding camera device (7, 8), wherein a first camera device (7) records a first, preferably larger, measurement area (10) with a first, lesser magnification and a second camera device (8) records a second, preferably smaller, measurement area (9) with a second, greater magnification, comprising imaging optics (11) for imaging the measurement areas (9, 10) and comprising an evaluation device for determining the particle size and/or the particle shape from the images of the two measurement areas (9, 10), wherein the measurement areas (9, 10) are located in at least one object plane (12, 13) and the object plane (12, 13) is imaged by the imaging optics (11) in at least two image planes (15, 16) in which the image sensors of the camera devices (7, 8) are located, **characterised in that** the imaging optics (11) comprise at least one optical element (14) arranged between the measurement zone (5) and the two camera devices (7, 8), on which and/or from which the light radiation emanating from the measurement zone (5) is divided into at least two beam parts respectively assigned to the camera devices (7, 8), and **in that** the illuminating device (6) is designed such that the first measurement area (10) and the second measurement area (9) are always illuminated together, wherein the first measurement area (10) is illuminated with the same intensity as the second measurement area (9).

2. The apparatus according to claim 1, **characterised in that** the optical element (14) divides the incident light radiation emanating from the measurement zone (5) into at least two beam parts which are spectrally identical to the incident light radiation.

3. The apparatus according to claim 1, **characterised in that** the illuminating device (6) has at least two light sources which emit light radiation of different wavelengths and/or from a different wavelength range, wherein the optical element (14) divides the incident light radiation emanating from the measurement zone (5) into at least two beam parts depending on the wavelength.

4. The apparatus according to any one of the preceding claims, **characterised in that** the illuminating device (6) is designed for the joint homogeneous illumination of the two measurement areas (9, 10).

5. The apparatus according to any one of the preceding claims, **characterised in that** the illuminating device (6) is designed for the pulsed illumination of the two measurement areas (9, 10), wherein, preferably, the duration and/or intensity of at least two pulses is different, wherein, in particular, a first pulse with a lower intensity and/or a shorter duration illuminates the two measurement areas (9, 10), while the first camera device (7) records the first, preferably larger, measurement area (10) with a first, lesser magnification, and a second pulse with a higher intensity and/or a longer duration illuminates the two measurement areas (9, 10), while the second camera device (8) records the second, preferably smaller, measurement area (9) with a second, greater magnification, and wherein, preferably, at least one camera device (7, 8) is synchronised with the illuminating device (6).

6. The apparatus according to any one of the preceding claims, **characterised in that** the imaging optics (11) have a lens (17, 19) arranged in particular between the measurement zone (5) and the optical element (14) and/or **in that** the imaging optics (11) have at least one lens (17, 19) with a variable focal length, in particular an electrically variable focal length.

7. The apparatus according to claim 1, **characterised in that** the measurement areas (9, 10) are located in parallel or coinciding object planes (12, 13).

8. The apparatus according to claim 1 or claim 2, **characterised in that** the distance between two object planes (12, 13) can be set such that a measurement volume (27) assigned to a more magnified measurement area (9) lies completely within a measurement volume (25) assigned to a less magnified measurement area (10).

9. The apparatus according to any one of the preceding claims, **characterised in that** the optical element (14) is designed such that the two beam parts have different light intensities.

10. The apparatus according to any one of the preceding claims, **characterised in that** at least three camera devices (7, 8, 22) are provided and **in that** the imaging optics (11) have at least one further optical element (21) at which a beam part is divided into two further beam parts.

11. The apparatus according to any one of the preceding claims, **characterised in that** the distance between the object planes (12, 13, 24, 31) of at least two measurement areas (9, 10, 23, 30) can be set such that a measurement volume (25, 27) of a measurement area (9, 10) and a measurement volume (26, 32) of a further measurement area (23, 30), preferably of equal size, merge into one another.

12. The apparatus according to any one of the preceding claims, **characterised in that** the imaging optics (11) have at least two optical elements (14, 21), wherein one optical element (14) divides light radiation into at least two beam parts with the same spectrum or the same colour and/or the same polarisation and another optical element (21) divides light radiation into at least two beam parts with different spectra or colours and/or different polarisations.

13. The apparatus according to any one of the preceding claims, **characterised in that** the imaging optics (11) are designed such that at least two camera devices (7, 8, 22, 29) having different detection properties, in particular different wavelength-dependent detection properties, are provided for recording a preferably identical measurement volume (25, 26, 27, 32).

14. A method for determining the particle size and/or the particle shape and/or the optical properties, such as transparency, of particles (2) in a particle stream (3), wherein the particles (2) flow through a measurement zone (5), wherein the measurement zone (5) is illuminated by at least one illuminating device (6), wherein at least two camera devices (7, 8) each record a measurement area (9, 10) of the measurement zone (5) assigned to the corresponding camera device (7, 8), wherein a first, preferably larger, measurement area (10) with a first, lower magnification is recorded by a first camera device (7), and a second, preferably smaller measurement area (9) with a second, greater magnification is recorded by a second camera device (8), wherein the measurement areas (9, 10) are imaged by means of imaging optics (11), wherein the particle size and/or the particle shape is determined by means of an evaluation device from the images of the two measurement areas (9, 10) for a high dynamic measurement area, and wherein the measurement areas (9, 10) are located in at least one object plane (12, 13) and the object plane (12, 13) is imaged by the imaging optics (11) in at least two image planes (15, 16) in which the image sensors of the camera devices (7, 8) are located, **characterised in that** the light radiation emanating from the measurement zone (5) is divided by at least one optical element (14) of the imaging optics (11) arranged between the measurement zone (5) and the two camera devices (7, 8) into at least two beam parts assigned to the camera devices (7, 8), and **in that** the first measurement area (10) and the second measurement area (9) are always illuminated together, wherein the first measurement area (10) is illuminated with the same intensity as the second measurement area (9).

## Revendications

1. Dispositif (1) permettant de déterminer la taille et/ou la forme et/ou les propriétés optiques, telles que la transparence, de particules (2) dans un flux de particules (3), comprenant un dispositif d'introduction (4) pour l'introduction des particules (2) dans une zone de mesure (5), les particules (2) traversant la zone de mesure (5), comprenant au moins un dispositif d'éclairage (6) pour éclairer la zone de mesure (5), comprenant au moins deux dispositifs de caméra (7, 8), qui prennent chacun des images d'une plage de mesure (9, 10), attribuée au dispositif de caméra (7, 8) correspondant, de la zone de mesure (5), un premier dispositif de caméra (7) prenant des images d'une première plage de mesure (10) de préférence plus grande avec un premier grossissement inférieur et un deuxième dispositif de caméra (8) prenant des images d'une deuxième plage de mesure (9), de préférence plus petite, avec un deuxième grossissement plus fort, comprenant une optique d'imagerie (11) pour représenter les plages de mesure (9, 10) et comprenant un dispositif d'analyse pour déterminer la taille et/ou la forme des particules à partir des images prises des deux plages de mesure (9, 10), les plages de mesure (9, 10) étant situées dans au moins un plan objet (12, 13) et le plan objet (12, 13) étant représenté par l'optique d'imagerie (11) en au moins deux plans d'image (15, 16), dans lesquels se trouvent les capteurs d'image des dispositifs de caméra (7, 8), **caractérisé en ce que** l'optique d'imagerie (11) présente au moins un élément optique (14) disposé entre la zone de mesure (5) et les deux dispositifs de caméra (7, 8), élément optique au niveau duquel et/ou par lequel le rayonnement lumineux émanant de la zone de mesure (5) est divisé en au moins deux parties de rayonnement respectivement attribuées aux dispositifs de caméra (7, 8) et **en ce que** le dispositif d'éclairage (6) est conçu de telle sorte que la première plage de mesure (10) et la deuxième plage de mesure (9) soient toujours éclairées ensemble, la première plage de mesure (10) étant éclairée avec la même intensité que la deuxième plage de mesure (9).

2. Dispositif selon la revendication 1, **caractérisé en ce que** l'élément optique (14) divise le rayonnement lumineux incident émanant de la zone de mesure (5) en au moins deux parties de rayonnement spectralement identiques au rayonnement lumineux incident.

3. Dispositif selon la revendication 1, **caractérisé en ce que** le dispositif d'éclairage (6) présente au moins deux sources lumineuses, qui émettent un rayonnement lumineux de longueurs d'onde différentes et/ou d'une plage de longueurs d'onde différentes, l'élément optique (14) divisant le rayonnement lumineux incident émanant de la zone de mesure (5) en au moins deux parties de rayonnement en fonction de la longueur d'onde.

4. Dispositif selon l'une quelconque des revendications précédentes, **caractérisé en ce que** le dispositif d'éclairage (6) est conçu pour l'éclairage homogène commun des deux plages de mesure (9, 10).

5. Dispositif selon l'une quelconque des revendications précédentes, **caractérisé en ce que** le dispositif d'éclairage (6) est conçu pour un éclairage pulsé des deux plages de mesure (9, 10), de préférence la durée et/ou l'intensité d'au moins deux impulsions étant différentes, en particulier, une première impulsion avec une intensité plus faible et/ou une durée plus courte éclairant les deux plages de mesure (9, 10), tandis que le premier dispositif de caméra (7) prend des images de la première plage de mesure (10), de préférence plus grande, avec un premier grossissement plus petit et une deuxième impulsion avec une intensité plus élevée et/ou une durée plus longue éclairant les deux plages de mesure (9, 10), tandis que le deuxième dispositif de caméra (8) prend des images de la deuxième plage de mesure (9), de préférence plus petite, avec un deuxième grossissement plus fort et dans lequel, de préférence, au moins un dispositif de caméra (7, 8) est synchronisé avec le dispositif d'éclairage (6).

6. Dispositif selon l'une quelconque des revendications précédentes, **caractérisé en ce que** l'optique d'imagerie (11) présente une lentille (17, 19) disposée notamment entre la zone de mesure (5) et l'élément optique (14) et/ou **en ce que** l'optique d'imagerie (11) comporte au moins une lentille (17, 19) à distance focale variable, en particulier électriquement variable.

7. Dispositif selon la revendication 1, **caractérisé en ce que** les plages de mesure (9, 10) sont situées dans des plans objet parallèles ou coïncidents (12, 13).

8. Dispositif selon la revendication 1 ou 2, **caractérisé en ce que** la distance entre deux plans objet (12, 13) peut être réglable de telle sorte qu'un volume de mesure (27) affecté à une plage de mesure (9) de plus fort grossissement se trouve complètement dans un volume de mesure (25) affecté à une plage de mesure (10) de plus faible grossissement.

9. Dispositif selon l'une quelconque des revendications précédentes, **caractérisé en ce que** l'élément optique (14) est conçu de telle sorte que les deux parties de rayonnement aient des intensités lumineuses différentes.

10. Dispositif selon l'une quelconque des revendications précédentes, **caractérisé en ce qu'**au moins trois dispositifs de caméra (7, 8, 22) sont prévus et que l'optique d'imagerie (11) comporte au moins un autre élément optique (21) sur lequel une partie de rayonnement est divisée en deux autres parties de rayonnement.

11. Dispositif selon l'une quelconque des revendications précédentes, **caractérisé en ce que** la distance des plans objet (12, 13, 24, 31) entre au moins deux plages de mesure (9, 10, 23, 30) peut être réglable de telle sorte qu'un volume de mesure (25, 27) d'une plage de mesure (9, 10) et un volume de mesure (26, 32) d'une autre plage de mesure (23, 30), de préférence de même taille, fusionnent.

12. Dispositif selon l'une quelconque des revendications précédentes, **caractérisé en ce que** l'optique d'imagerie (11) comporte au moins deux éléments optiques (14, 21), un élément optique (14) divisant le rayonnement lumineux en au moins deux parties de rayonnement de même spectre ou de même couleur et/ou de même polarisation et un autre élément optique (21) divisant le rayonnement lumineux en au moins deux parties de rayonnement avec des spectres ou des couleurs différents et/ou des polarisations différentes.

13. Dispositif selon l'une quelconque des revendications précédentes, **caractérisé en ce que** l'optique d'imagerie (11) est conçue de telle sorte qu'au moins deux dispositifs de caméra (7, 8, 22, 29) sont prévus pour prendre des images d'un volume de mesure de préférence identique (25, 26, 27, 32), les dispositifs de caméra présentant des propriétés de détection différentes, notamment différentes en fonction de la longueur d'onde.

14. Procédé pour déterminer la taille et/ou la forme et/ou les propriétés optiques, telles que la transparence, de particules (2) dans un flux de particules (3), les particules (2) traversant une zone de mesure (5), la zone de mesure (5) étant éclairée par au moins un dispositif d'éclairage (6), dans lequel au moins deux dispositifs de caméra (7, 8) prennent chacun des images d'une plage de mesure (9, 10) attribuée au dispositif de caméra correspondant (7, 8) de la zone de mesure (5), dans lequel un premier dispositif de caméra (7) prend une image d'une première plage de mesure (10), de préférence plus grande, avec un premier grossissement inférieur et un deuxième dispositif de caméra (8) prend une image d'une deuxième plage de mesure (9), de préférence plus petite, avec un deuxième grossissement plus fort, dans lequel les plages de mesure (9, 10) sont représentées au moyen d'une optique d'imagerie (11), dans lequel la taille et/ou la forme des particules est déterminée au moyen d'un dispositif d'analyse à partir des images des deux plages de mesure (9, 10) pour une plage de mesure dynamique élevée et dans lequel les plages de mesure (9, 10) sont situées dans au moins un plan objet (12, 13) et le plan objet (12, 13) est représenté par l'optique d'imagerie (11) en au moins deux plans d'image (15, 16) dans lesquels se trouvent les capteurs d'image des dispositifs de caméra (7, 8), **caractérisé en ce que** le rayonnement lumineux émanant de la zone de mesure (5) est divisé au moyen d'au moins un élément optique (14) de l'optique d'imagerie (11), disposé entre la zone de mesure (5) et les deux dispositifs de caméra (7, 8), en au moins deux parties de rayonnement affectées respectivement aux dispositifs de caméra (7, 8) et que la première plage de mesure (10) et la deuxième plage de mesure (9) sont toujours éclairées ensemble, la première plage de mesure (10) étant éclairée avec la même intensité que la deuxième plage de mesure (9).
